# EUROPEAN PATENT APPLICATION

(11) **EP 4 811 355 A1**
(43) Date of publication of application: **23.09.2026**
(21) Application number: 26163902.5
(22) Date of filing: 11.03.2026
(51) Int. Cl.: G10L 15/26, G06F 16/60, G06N 3/08, G06N 20/00, H04M 3/436, H04M 1/57

(54) **GENERATING AND USING TRAINING DATASETS FOR ROBOCALL CAMPAIGN IDENTIFICATION AND/OR MITIGATION**

(30) Priority: 18.03.2025 US 202519082999
(71) Applicant: Ribbon Communications Operating Company, Inc., Westford, MA 01886 (US)
(72) Inventor: Bharrat, Shaun Jaikarran, Edison, NJ 08820 (US); Stovenour, Michael, McKinney, TX 75070 (US)
(74) Representative: Frenkel, Matthias Alexander

(57) **Abstract**

The present invention relates to methods, systems, and apparatus for generating labeled robocall campaign datasets, using the labeled robocall campaign datasets for generating and/or training robocall detection models and/or deployment and use of the generated and/or trained robocall detect models. An exemplary embodiment includes the steps of: generating a labeled robocall campaign training dataset; training one or more robocall detection models using the generated labeled robocall campaign training dataset; and deploying one or more or all or any combination of the one or more trained robocall detection models in a communications network.

## Description

### FIELD OF INVENTION

The present invention relates to methods, systems, and apparatus for generating and using training datasets for robocall campaign identification and/or mitigation.

### BACKGROUND

In some prior known systems the concept of how to build a training dataset for robocall scoring based on the media content of calls includes using the following scheme.

First, digital fingerprints of the media of a sampling of calls in a live service provider network are computed. The digital fingerprint is based on a Discrete Fourier Transform of the media and has the property that if two instances of media comprise a recording of the same words, then the two fingerprints will "match".

Second, digital fingerprints of the media of calls collected by a honeypot that are known to be mostly robocalls are computed.

Third, calls sampled from the service provider network having a digital fingerprint "matching" one of a known robocall collected in the honeypot are labeled as SPAM. Other calls collected from the service provider network which are not labeled as SPAM are labeled as non-SPAM.

Fourth, the labeled dataset is then used to train a robocall classifier using features in the signaling stream (i.e., explicitly excluding any media), and then using that robocall classifier to identify robocalls based on future signaling.

This scheme is targeted specifically for robocalling in which a recording is played by the robocaller. Here the words and the speaker are the same, but there may be slight timing differences (such as when the recording starts to play relative to the start of the call), clipping and dropouts (small portions of a recording being lost), and differences in background noise (e.g., audio quality differences due to network path or codecs used).

As robocalling has evolved, however, robocallers are implementing adaptations that reduce the effectiveness of the above described scheme. More recently many more variants of the same robocall are being utilized as determined from analysis of the dataset of calls captured in a honeypot. For example, Google Business listing robocalls having the following various variants have been captured in a honeypot dataset. Some of the differences are shown in italics with respect to a few variants of the robocall recording.
- "Hello, we are calling from online listing group because your Google Business Listing needs attention. If your listing is not showing up properly, customers will not be able to contact you or find your business location. And could think you're closed if you are the business owner, press one now to verify or update your information. Press nine to opt out or dial 8775569255. Bye."
- *"Hello and please don't hang up. We tried to contact you numerous times about your Google business listing. Our record show* your Google business listing *may be suspended or not verified through Google. This can cause customers searching for your services to not be able to find your business online press one to speak with a map listing expert so we can quickly check the status of your Google business listing. this will only take* a *few minutes* press nine or *call* 8775942793 *to opt out that."*
- "Hello, *this is web listing pros calling about* your Google my business listing. Our records show that your listing is either not verified or missing important information that could be keeping your customers from finding you on Google Press One. Now to verify your *Google listing, if you are* a *business owner or your account is not verified* on Google Press One. Now to verify your company press one to be removed. Call 8776151191 or press nine. Bye."
- "Hello, this *prime marketing* calling about your Google my business listing. Our records show that your listing is either not verified or missing important information that could be keeping your customers from finding you on Google Press One. Now to verify on Google Press One. Now to be removed. Call 18443927230 or press nine now. Bye."

While human analysis of the above messages would clearly identify all of these examples as being part of a single campaign, the variation is sufficient to fool systems that are looking for identical recordings with consistent content such as for example the digital fingerprint scheme discussed above for identifying robocalls.

While each of the above recordings would likely eventually be classified as a robocall campaign using digital fingerprints, they would not all be classified as the same campaign. From a practical perspective, a classifier built with N*M instances of a target label will be both easier to train and significantly more accurate than N distinct classifiers each built off M target labels. The problem gets worse as the spammers increase the variety, i.e., the value of N, along with a reduction of the number of instances for each (i.e., the value of M).

From the foregoing, it is apparent that there is a need for new and/or improved methods of generating labeled robocall campaign datasets that can be used for training that can be used to train robocall detection models, devices, and systems. From the foregoing, it is apparent that there is a need for a technological solution to how to effectively, efficiently and in a cost-efficient manner identify robocalls and robocall campaigns that utilize a plurality of variants in the campaigns' robocall recorded messages. From the foregoing, it also apparent that there is a need for new and/or improved methods and apparatus which can take into account semantic similarity of language in the detection and mitigation of robocalls and robocall campaigns. From the foregoing, it is also apparent that there is a need for new and/or improved methods and apparatus for generating models that can detect robocalls of the same campaign utilizing variants of a recorded robocall message.

### SUMMARY

The present invention provides new and/or improved methods, apparatus and systems for generating labeled robocall campaign datasets that can be used to train robocall detection models, devices, and/or systems. Various embodiments of the present invention provide new and/or improved methods, apparatus and systems that effectively, efficiently and in a cost-efficient identify robocalls and robocall campaigns that utilize a plurality of variants in the campaigns robocall recorded messages. Various embodiments of the present invention provide new and/or improved methods and apparatus which can take into account semantic similarity of language in the detection and mitigation of robocalls and robocall campaigns. Various embodiments of the present invention provide new and/or improved methods and apparatus for generating models (e.g., machine learning neural network classification models) that can detect robocalls of the same campaign utilizing variants of a recorded robocall message. Various embodiments of the present invention provide new and/or improved methods and apparatus to determine a robocall confidence score or probability that takes into account that the incoming call signaling features indicate that the incoming call is part of a robocall campaign. Various embodiments of the present invention address and solve one or more of the problems discussed above.

The present invention provides a way to generate training datasets for robocall campaigns that can be used to generate and/or train robocall detection models, devices and system that may be, and in some embodiments are, deployed into one or more networks to detect and mitigate future robocalls and robocall campaigns.

An exemplary method of the present invention includes the steps of: generating a labeled robocall campaign training dataset; training one or more robocall detection models using said generated labeled robocall campaign training dataset; and deploying one or more or all or any combination of said one or more trained robocall detection models in a communications network.

In some embodiments, at least one of said one or more robocall detection models is a machine learning neural network classifier model that detects whether a received call is a robocall. In some embodiments, the one or more robocall detection models is not based on features included in the media included in a call and does not require the examination or use of a call's media to determine whether the call is or is not a robocall.

In some embodiments, the one or more robocall detection models includes a plurality of different robocall detection models, said plurality of different robocall detection models including a first robocall campaign detection model and a second robocall campaign detection model. The first robocall campaign detection model is trained on a subset of the labeled robocall campaign training dataset, said subset of the labeled robocall campaign training dataset including a first set of records including extracted signaling features from a first set of call detail records corresponding to calls that were identified as being part of first robocall campaign and a second set of records including extracted signaling features from a second set of call detail records corresponding to calls that were identified as not being part of the first robocall campaign. The second robocall campaign detection model is trained on a subset of the labeled robocall campaign training dataset, said subset of the labeled robocall campaign training dataset including a third set of records including extracted signaling features from a third set of call detail records corresponding to calls that were identified as being part of second robocall campaign and a fourth set of records including extracted signaling features from a fourth set of call detail records corresponding to calls that were identified as not being part of the second robocall campaign.

In some embodiments, the step of training the first robocall campaign detection model includes training the first robocall campaign detection model to detect whether or not a call is part of the first robocall campaign based on signaling features of the call, said signaling features of the call not including a calling party telephone number.

In some embodiments, the step of training the second robocall campaign detection model includes training the second robocall campaign detection mode to detect whether or not a call is part of the second robocall campaign based on signaling features of the call, said signaling features of the call not including a calling party telephone number. In some embodiments, the call is a Session Initiation Protocol (SIP) call; and the signaling features of the call used to detect whether or not the call is a robocall are included in a SIP INVITE request message.

In some embodiments, the step of generating a labeled robocall campaign training dataset includes: converting, by a speech-to-text converter, speech included in a first portion of audio content from a first call to text.

In some embodiments, the step of generating a labeled robocall campaign training dataset further includes: (i) creating, by a first neural network encoder, a first embedding vector based on said text; (ii) generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created; and (iii) determining whether or not the semantic similarity score (e.g., a numerical value from 0 to 1) is above a first threshold value (e.g., 0.8 ).

In some embodiments, the first neural network encoder is a Large Language Model (LLM) embeddings-only neural network encoder.

In some embodiments, the first neural network encoder does not include a decoder portion.

In some embodiments, the step of generating a labeled robocall campaign training dataset further includes: when said semantic similarity score is determined to be above the first threshold value, determining that the first call is part of the first robocall campaign; and when said semantic similarity score is determined to not be above the first threshold value determining that the first call is not part of the first robocall campaign.

In some embodiments, the step of generating the semantic similarity score by comparing the first embedding vector to the second embedding vector is part of performing a semantic similarity search to identify an embedding vector that is a closest match semantically to the first embedding vector from a plurality of embedding vectors, each of the plurality of embedding vectors having been created from text converted from speech of a different robocall, said semantic similarity search identifying the robocall with the highest semantic similarity score when compared to the first embedding vector.

In some embodiments, the step of generating the semantic similarity score by comparing the first embedding vector to the second embedding vector is part of performing a vector search to identify an embedding vector that is a closest distance to the first embedding vector from a plurality of embedding vectors, each of the plurality of embedding vectors having been created from text converted from speech of a different robocall, said vector search identifying the robocall with the smallest distance when compared to the first embedding vector, said semantic similarity score being based on the distance between the first embedding vector and the embedding vector from the plurality of embedding vectors that is the closest in distance to the first embedding vector (in this case the score has an inverse relationship to the distance - the smaller the distance the higher the score; in some other embodiments the score could have a direct relationship to the distance in which case the smaller the distance between vectors the smaller the score, in such cases a score below a threshold value is used to determine if the first embedding vector is part of the campaign of the closest identified embedding vector of the plurality of embedding vectors).

In some embodiments, the step of generating a labeled robocall campaign training dataset further includes: when said semantic similarity score is determined to not be above the first threshold value, determining that the first call is for a new robocall campaign for which no embedding vector is included among said plurality of embedding vectors to which the first embedding vector was compared; and in response to determining that the first call is for a new robocall campaign: (i) generating a first record, said first record including a unique call identifier for the first call, the first embedding vector, and a unique robocall campaign identifier; and (ii) storing the first record in a database (e.g., a vector database or a general database with additional vector search capabilities or a vector plugin component), said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of.

In some embodiments, the step of generating a labeled robocall campaign training dataset further includes: when said semantic similarity score is determined to be above the first threshold value, determining that the first call is part of the first robocall campaign; and in response to determining that the first call is part of the first robocall campaign: (i) generating a first record, said first record including a unique call identifier for the first call, the first embedding vector, and a robocall campaign identifier corresponding to the first robocall campaign identifier, said first robocall campaign identifier being obtained from a second record including the second embedding vector and the first robocall campaign identifier; and (ii) storing the first record in a database, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of, said second record being one of said plurality of records.

In some embodiments, the first record further includes a first number K of words of the converted text of the first portion of the audio content of the speech of the first call, K being a positive integer greater than 1 (e.g., K = 100); and wherein each of the plurality of records also includes a first number K of words of the converted text of the first portion of the audio content of the speech of the call to which the record corresponds. In some embodiments, each of the plurality of embedding vectors corresponds to a call meeting a first set of criteria, said first set of criteria being indicative of a robocall, said first set of criteria including a first criteria, said first criteria being that signaling for the call including a destination or callee (target) telephone number that was unallocated at the time of the call.

In some embodiments, the first set of criteria includes a second criteria, said second criteria being that the destination or callee telephone number had been unallocated for a first period of time (e.g., 2 years).

In some embodiments, the first portion of audio content from the first call includes a first amount of speech. In some embodiments, the first portion of audio content from the first call is for a first period of time (e.g., 60 seconds, 1 minute, 2 minutes, etc.). In some embodiments, the first amount of speech is speech from a calling party. In some embodiments, the first portion of audio content from the first call is the entire audio content from the first call.

In some embodiments, the step of generating a labeled robocall campaign training dataset further includes: extracting signaling features from a first call detail record corresponding to the first call; generating a first record for the first call, said first record including: said extracted signaling features, a first robocall campaign identifier, said first robocall campaign identifier being a unique identifier assigned to records corresponding to calls which have been determined to be part of the first robocall campaign; and labeling the first record as containing information for a robocall (e.g., labeling the record "POSITIVE").

In some embodiments, the step of labeling the first record as containing information for a robocall includes storing information in the record that indicates the record corresponds to a robocall (e.g., populating a label field of the record with the word "POSITIVE"). In some embodiments, the first record further includes a first call identifier for the first call, said first call being a Session Initiation Protocol call, said first call identifier being a SIP call-id or a generated identifier based on the SIP call-id for the first call. In some embodiments, the first record further includes a first call identifier for the first call, the first call identifier including a destination calling number for the first call, a numerical date including day, month and year on which the first call occurred, and a timestamp corresponding to the first call. In some embodiments, the first record further includes a first call identifier, said first call identifier being a unique identifier which identifies the first call from other calls and which identifies the first record from other labeled robocall campaign training dataset records corresponding to other calls.

In some embodiments, the step of generating a labeled robocall campaign training dataset further includes: extracting signaling features from a call detail record corresponding to a third call, said third call not having been determined to be a robocall (e.g., the callee or target telephone number is not a unallocated telephone number); generating a record for the third call, said record for the third call including: said extracted signaling features from the call detail record corresponding to the third call; and labeling the record for the third call as containing information for a call which is not a robocall (e.g., labeling the record "NEGATIVE"). In some embodiments, the third record further includes: a robocall campaign identifier set to NULL or information indicating that the third call does not belong to a robocall campaign; and a call identifier for the third call (e.g., SIP call_id for the third call when the third call is a SIP call).

In some embodiments, the step of generating a labeled robocall campaign training dataset further includes: extracting signaling features from a call detail record for a fourth call; determining a call identifier for the fourth call from information included in the call detail record for the fourth call (e.g., SIP call_id); performing a search of a plurality of records using the call identifier for the fourth call as a search key, each record of the plurality of records corresponding to a different call having been determined to be a robocall, each record of the plurality of records including: an embedding vector for the call to which record corresponds, a communications media fingerprint for the call to which the record corresponds, a robocall campaign identifier for the call to which the record corresponds, and a call identifier for the call to which the record corresponds; and in response to said search failing to identify a record from the plurality of records including the call identifier for the fourth call: obtaining a communications media fingerprint from a trace record for the fourth call; performing a fuzzy fingerprint search of the plurality of records using the communications media fingerprint for the fourth call; and when said fuzzy fingerprint search identifies a record from the plurality of records with a matching communications media fingerprint: (i) generating a record for the fourth call, said record for the fourth call including: said extracted signaling features from the call detail record for the fourth call, and a robocall campaign identifier obtained from the record with matching communications media fingerprint, the call identifier for the fourth call; and (ii) labeling the record for the fourth call as containing information for a robocall (e.g., labeling the record "POSITIVE").

In some embodiments, the step of generating a labeled robocall campaign training dataset further includes: when said fuzzy fingerprint search does not identify a record from the plurality of records with a matching communications media fingerprint: (i) generating a record for the fourth call, said record for the fourth call including: said extracted signaling features from the call detail record for the fourth call, a robocall campaign identifier set to NULL or information indicating that the fourth call does not belong to a robocall campaign, and the call identifier for the fourth call (e.g., SIP call_id for the fourth call when the fourth call is a SIP call), and (ii) labeling the record for the fourth call as not containing information for a robocall (e.g., labeling the record "NEGATIVE").

In some embodiments, the method further includes the steps of: receiving signaling information for a call by a first deployed trained robocall detection model, said first deployed robocall detection model being one of said deployed one or more trained robocall detection models; and determining in real time, by the first deployed trained robocall detection model, that the received call is part of a first robocall campaign based on the received signaling information (e.g., calling party telephone number and/or content from the SIP User-Agent header for the call matches to a previous call determined to be part of a first robocall campaign); and determining, by the first deployed trained robocall detection model, a first robocall confidence score for the received call based on information about the first robocall campaign.

The invention is also directed to systems and apparatus that are used to implement the various method embodiments of the invention. In some apparatus embodiments, each of the apparatus/nodes/devices of the system includes a processor and a memory, the memory including instructions that when executed by the processor control the apparatus/node/device of the system to operate to perform the steps of various method embodiments of the invention.

An exemplary system in accordance with an embodiment of the present invention includes: memory; and a first processor, said first processor controlling the system to perform the following operations: generating a labeled robocall campaign training dataset; training one or more robocall detection models using said generated labeled robocall campaign training dataset; and deploying one or more or all or any combination of said one or more trained robocall detection models in a communications network.

In some embodiments, the operation of generating a labeled robocall campaign training dataset includes: converting, by a speech-to-text converter, speech included in a first portion of audio content from a first call to text.

In some embodiments, the operation of generating a labeled robocall campaign training dataset further includes: creating, by a first neural network encoder, a first embedding vector based on said text; generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created; and determining whether or not the semantic similarity score (e.g., a numerical value from 0 to 1) is above a first threshold value (e.g., 0.8 ). In some embodiments, the first neural network encoder is a Large Language Model (LLM) embeddings-only neural network encoder.

While various embodiments have been discussed in the summary above, it should be appreciated that not necessarily all embodiments include the same features and some of the features described above are not necessary but can be desirable in some embodiments. Numerous additional features, embodiments and benefits of various embodiments are discussed in the detailed description which follows.

### BRIEF DESCRIPTION OF THE DRAWINGS

Figure 1 illustrates an exemplary system in accordance with an embodiment of the present invention.
Figure 2 illustrates an exemplary method in accordance with an embodiment of the present invention.
Figure 3 illustrates another exemplary method in accordance with an embodiment of the present invention.

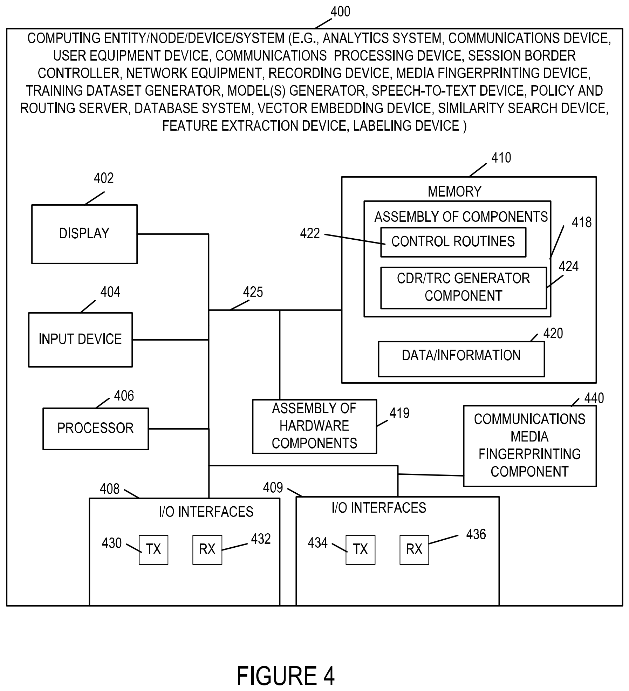

Figure 4 illustrates an exemplary computing entity/node/device/system (e.g., an analytics system, a communications processing device (e.g., Session Border Controller), network equipment, user equipment, recording device, a communications media fingerprinting device, training data set generator, model generator and trainer, a speech-to-text device, policy and routing server, database system (e.g., with vector searching capability), vector embedding device, similarity search device, feature extraction device, model deployment device, and a labeling device), in accordance with an embodiment of the present invention.

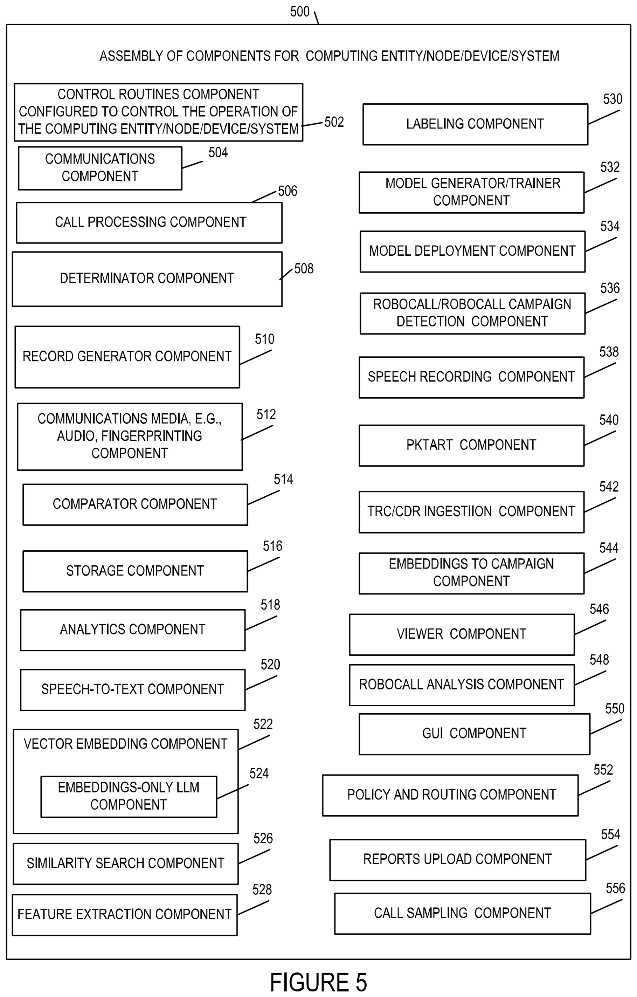

Figure 5 illustrates an exemplary assembly of components for a computing entity/node/device/system (e.g., an analytics system, a communications processing device, a Session Border Controller, network equipment, user equipment, recording device, a communications media fingerprinting device, training data set generator, model generator and trainer, a speech-to-text device, policy and routing server, database system (e.g., with vector searching capability), vector embedding device, similarity search device, signaling feature extraction device, model deployment device, robocall detection model, a robocall detection system, a classifier model, and a labeling device), in accordance with an embodiment of the present invention.
Figure 6 illustrates an exemplary system and a software pipeline illustrating the flow of information/data between components of the system as well as processing steps and/or operations using the exemplary system in accordance with an embodiment of the present invention.
Figure 7 illustrates a flowchart of an exemplary method in accordance with an embodiment of the present invention.
Figure 8 illustrates segmenting media, e.g., speech, of a communication, e.g., a call.
Figure 9 illustrates the format of a media segment fingerprint.
Figure 10 illustrates the combination of Figures 10A, 10B, and 10C.
Figure 10A illustrates the first part of a flowchart of a method in accordance with an embodiment of the present invention.
Figure 10B illustrates a second part of a flowchart of a method in accordance with an embodiment of the present invention.

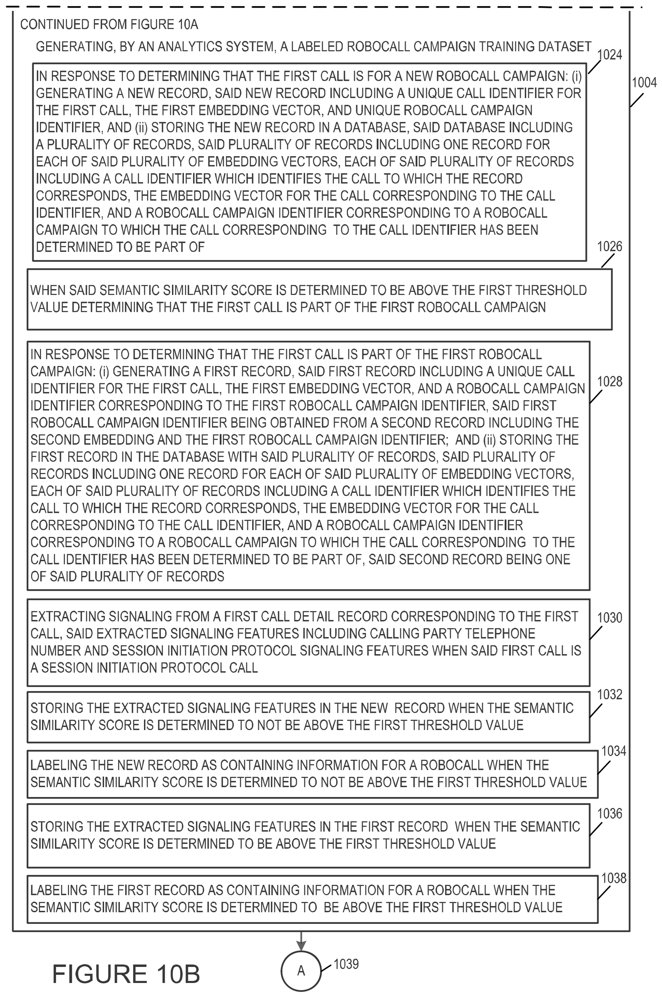

Figure 10B illustrates a third part of a flowchart of a method in accordance with an embodiment of the present invention.

### DETAILED DESCRIPTION

An important aspect of generating or creating models, classifiers, devices, and/or systems for identifying, detecting and/or mitigating robocalls and/or robocall campaigns with variants of recorded messages is the generation of data upon which these models, classifiers, devices, and/or systems can be trained and/or tested. The present invention includes the methods and apparatus for capturing, obtaining, and/or generating data that can be used for creating, generating, and/or training models, classifiers, devices, and/or systems to identify, detect and/or mitigate robocalls and/or robocall campaigns with variants of recorded messages. The present invention further includes methods and apparatus that create, generate, and/or train models, classifiers, devices, and/or systems to identify, detect and/or mitigate robocalls and/or robocall campaigns with variants of recorded messages. The present invention further includes methods and apparatus which identify, detect and/or mitigate robocalls and/or robocall campaigns with variants of recorded messages.

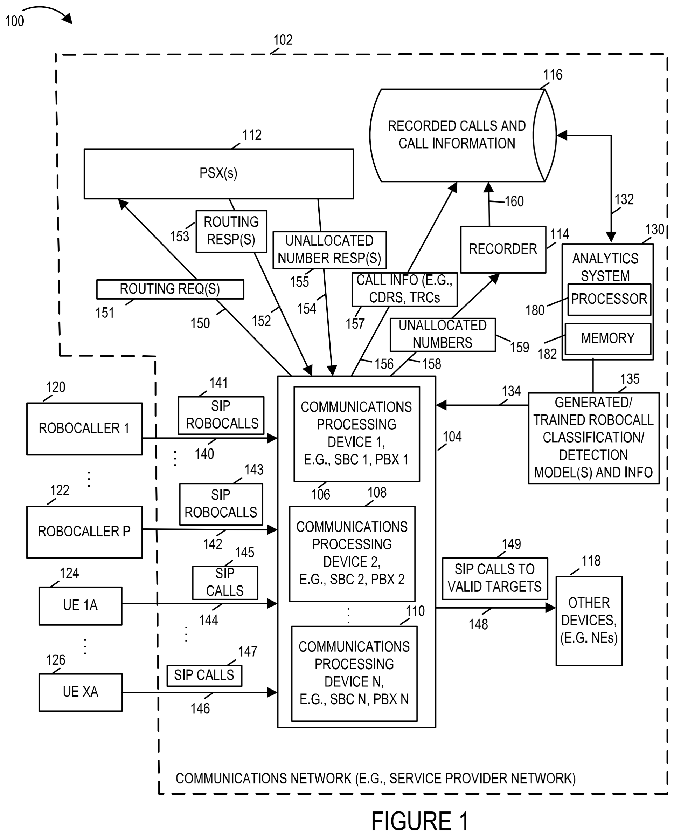

Figure 1 illustrates an exemplary system 100 in accordance with an exemplary embodiment of the present invention.

The exemplary system 100 includes a communications network 102 (e.g., a service provider network), a plurality of robocallers (robocaller 1 120, ..., robocaller P 120, P being an integer greater than 1), and a plurality of user equipment devices (UE 1A 124, ..., UE XA 126 (X being an integer greater than 1). The communications network 102 includes a plurality of communications processing devices (e.g., a plurality of Session Initiation Protocol call processing devices, a plurality of Session Border Controllers (SBCs) forming for example a group or cluster of SBCs, or a plurality of Private Branch Exchanges (PBXes) forming for example a group or cluster of PBXes)), one or more Policy and Routing Servers (PSX) 112 (e.g., one or more centralized policy and routing exchange service servers), a recorder apparatus 114 (e.g., a call recorder device or system), a database or storage system 116 in which the recorded calls and information related to and/or corresponding to the recorded calls is stored (e.g., Call Detail Records, Trace Records, media content, metadata corresponding to the media content or the call), an analytics system 130, and other devices 118 (e.g., communications devices such as network equipment devices and/or user equipment devices) and a plurality of communications links 140, 142, 144, 146, 148, 132, 134, 150, 152, 154, 156, 158, and 160 which coupled and/or connect various entities of the system 100 together. The communications links 132, 134, 140, ..., 142, 144, . . ., 146, 148, 150, 152, 154, 156, 158, and 160 are typical cables and/or wired bidirectional communications links but can include in some embodiments be wireless communications links. The plurality of communications processing devices 104 includes: communications processing device 1 106 (e.g., SBC 1 or PBX 1), communications processing device 2 108 (e.g., SBC 2 or PBX 2), . . ., communications processing device N (SBC N or PBX N), N being an integer greater than 1), the plurality of communications devices being coupled and/or connected. The analytics system 130 is coupled and/or connected to the database system 116 via communications link 132. The analytics system 130 is coupled and/or connected to the plurality of communications processing device 134 via communications link 134. The analytics system 130 includes a processor 180 and memory 182. The memory includes computer executable instructions or control routines which control the analytics system 130 to perform the operations, functions, and steps described herein in connection with the analytics system 130.

In some embodiments, one or more or all of the analytics system 130, plurality of communications processing devices and/or the one or more PSX(s) are implemented as components, applications or functions executing on a compute node or server in a cloud. In some embodiments, one or more or all or any combination of the plurality of communications processing devices or PSX(s) are implemented as: (i) a standalone hardware device, (ii) a server, (iii) an application executing on a server, (iv) an application or a function executing on a node (e.g., a compute node) or processor, or (v) a Kubernetes Pod executing on a Kubernetes node of a Kubernetes system.

In some embodiments, a recording device/entity such as recorder 114 is included in one or more of the communications processing devices of the system. In such cases, the Policy and Routing server indicates in the routing response message that the target of the SIP call is not a valid target. The communications processing device then performs the operations described in connection with the recording device/entity described above.

In some embodiments, the recorder 114 and/or the database 116 is part of the analytics system 130. In such embodiments, the Policy and Routing Server provides a routing path to the analytics system (e.g., communications interface) of the analytics system which performs the operations of the recording device/entity described above. When the database 116 is included in the analytics system 130 the communications processing device sends the call information 157 (e.g., Call Detail Records and/or Trace Records directly to the analytics system 130 which stores the recorded call media, Call Details Records and Trace Records in its memory and/or storage device.

Robocaller 1 120, ..., Robocaller P 120 are coupled and/or connected to the plurality communications processing devices 104 via communications links 140, ..., 142 respectively which may connect or couple to one or more of the communications processing devices of the plurality of communications processing devices 104. SIP robocalls 141 are initiated by robocaller 1 120 and received/processed by one of the communications processing devices of the plurality of communications processing devices 104 (e.g., communications processing device 1 106, communications processing device 2 108 or communications processing device N 110). SIP robocalls 143 are initiated by robocaller N 122 and received/processed by one of the communications processing devices of the plurality of communications processing devices 104 (e.g., communications processing device 1 106, communications processing device 2 108 or communications processing device N 110).

UE 1A 124, ..., UE XA 126 are coupled and/or connected to the plurality communications processing devices 104 via communications links 144, ..., 146 respectively which may connect or couple to one or more of the communications processing devices of the plurality of communications processing devices 104. SIP calls 145 are initiated by UE 1A 124 and received/processed by one of the communications processing devices of the plurality of communications processing devices 104 (e.g., communications processing device 1 106, communications processing device 2 108 or communications processing device N 110). SIP calls 147 are initiated by UE 1X 126 and received by one of the communications processing devices of the plurality of communications processing devices 104 (e.g., communications processing device 1 106, communications processing device 2 108 or communications processing device N 110).

The communications processing devices (e.g., SBCs) of the plurality of communications processing devices 104 receive SIP calls (e.g., SIP robocalls 141, SIP robocalls 143, SIP calls 145 and SIP calls 147) from outside the communications network (e.g., a service provider network) 102. The SIP calls include both robocalls and non-robocalls.

In response to receiving at a communications processing device (e.g., communications processing device 1 106 (e.g., an SBC 1)) a SIP call (e.g., a SIP INVITE request message initiating a call), the communications processing device generates a routing request (e.g., one of the routing requests 151) and communicates the generated routing request to a Policy and Routing Server (e.g., one of the PSX(s) 112). The routing request includes information from the SIP call about the target of the SIP call (e.g., subscriber /callee telephone number and/or other subscriber/callee identifying information corresponding to the target of the SIP call).

The Policy and Routing Server determines based on the information included in the routing request (e.g., subscriber/callee telephone number and/or other subscriber/callee identifying information) whether the target of the SIP call is a valid target. A valid target is a target that corresponds to an active subscriber/callee of the service provider network. When Policy and Routing Server determines that the target of the SIP call is a valid target, the Policy and Routing Server generates and/or determines one or more valid routing paths from the communications processing device from which the routing request was received to a target device of the target (e.g., a communications device (e.g., smartphone) of the subscriber/callee which is registered with network service provider). For example, when the target telephone number is allocated by the communications network 102 to a communications device of the subscriber such as a smartphone, one or more routing paths to the communications device of the subscriber is generated or determined by the Policy and Routing Server in response to the routing request received from the communications processing device. The Policy and Routing Server then generates a routing response message (e.g., one of the routing response messages 153 which includes a list of valid routes to the target. The list of valid routes to the target includes at least one valid routing path from the determined one or more routing paths to the communications device of the subscriber from the communications processing device which made the routing request but can include a plurality of different routes to the target. After generating the routing response message, the Policy and Routing Server communicates the routing response message to the communications processing device which sent the routing request.

When the Policy and Routing Server determines that the target is not a valid target and that is there is no active subscriber/callee corresponding to the target identifying information (e.g., target subscriber/callee telephone number and/or other identifying information), then the Policy and Routing Server determines that there are no valid routes to the target. This occurs, for example, when the target telephone number is unallocated (i.e., a telephone number not assigned to a subscriber of the network). The Policy and Routing Server then generates one of the following: (i) a routing response message that indicates that there are no valid routes to the target of the SIP call or (ii) a routing response message that identifies a route to a recording device/entity (e.g., recorder 114 which is a communications device capable of receiving a call (e.g., a SIP call), playing a message (e.g., an audio message and/or audio visual message), and recording media for the call)). The routing response message for the invalid target is shown as an unallocated number response 155 in Figure 1. The unallocated number response message can also be included as routing response 153 with the information in the response message indicating that no valid route exists or a route to the recorder. The Policy and Routing Server sends the routing response message (e.g., unallocated routing response message 155) to the communications processing device from which the routing request for the SIP call was received (e.g., communications processing device 1 106).

In response to receiving a routing response with a list of routes or routing paths to a valid target of the SIP call, the communications processing device egresses the SIP call to the valid target (e.g., SIP calls 149 being egressed to valid target (e.g., one of the communications devices 118) using one of the routing paths included int the routing response. The SIP call is then routed along the routing path to the target device. The SIP call may, and in various embodiments does, traverse a variety of other devices (e.g., network entity devices) along the routing path to the target communications device (e.g., communications device of the subscriber identified by information in the SIP call such as for example a smartphone of the subscriber to which a target telephone number included in the SIP call as the destination of the call is assigned).

In response to receiving the unallocated number routing response which includes a route to a recording device/entity (e.g., recorder 114), the communications processing device egresses the SIP call to the recording device/entity (e.g., Recorder entity 114 of system 100). In some embodiments, the unallocated routing response includes information identifying the target as an invalid target so that the communications processing device is aware that the call is to an invalid target and can determine for example based on current traffic or operating conditions whether or not to egress the SIP call to the recording device using the provided routing information included in the routing response or instead terminate the SIP call with an error code. By allowing the communications processing device to make the decision as to whether or not to route the SIP call to the recording device, the communications device is able to statistically sample the SIP calls it is receiving for invalid targets which are to be sent for analysis. In some embodiments, this unallocated number routing response is a normal routing response which does not indicate that the call is to an invalid target but does indicate that the routing path to use for the call is to the recording device/entity. In such embodiments, the Policy and Routing Server can determine whether to send all calls with invalid targets to the recording device or statistically determine which calls are to be sent to the recorder.

In response to receiving the unallocated number routing response which indicates that there are no valid routes to the target, the communications processing device terminates the call and tracks the termination with an error code indicating an invalid target (e.g., target for unallocated telephone number). In such cases, the Policy and Routing Server may determine through statistical sampling which SIP calls to invalid targets are to be routed to the recording entity and which are to be terminated by the communications processing device.

When the communications processing device egresses the SIP call to the recording device/entity it utilizes the routing path identified in the unallocated routing response. The recording device/entity (e.g., recorder 114) receives the SIP call egressed from the communications processing device, plays a greeting (such as for example "Hello. This call is being recorded."), and then records the media stream of the SIP call. When the call isn't terminated by the caller within a predetermined timeout period (e.g., 5 minutes), the recording device (e.g., recorder 114) then initiates SIP call termination procedures and terminates the SIP call. Information about the SIP call including the recorded media for the SIP call is then stored by the recording device/entity in a recorded calls and call information database (e.g., database server system 116 of system 100). In some embodiments, the recording device/entity stores the call information including the recorded media in memory attached to or included in the recording device/entity. Call information 157 including Call Detail Records (CDRs) and Trace Records (TRCs) for the SIP calls routed to the recording device/entity (e.g., recorder 114) are communicated to and stored in the database 116 along with the recorded call information from the recording device. The call information 157 (e.g., CDRs and TRCs) are generated by the communications processing device which processed the SIP call.

Using unallocated target telephone numbers for identifying SIP calls to record for analysis has the advantage over other determinants in that it is a determinant with an increased likelihood that the call being recorded is a robocall and also provides a legal justification for recording the call. However, other determinants can be used in place of or in addition to unallocated target telephone numbers such as other call target identifying information (e.g., SIP IP destination address of target, destination IP address of target, . . .SIP header information (e.g., To header information) and/or caller/originator information (e.g., subscriber telephone number and/or other identifying information, SIP From header information)). For example, if the telephone number for the originator/caller is not an assigned number or the SIP calls appears be from an address identified with a spammer, the call can be recorded to see if the media (message played) is part of a known robocall campaign or corresponds to a new campaign being initiated by a prior known robocaller. Other determinates that can be used in identifying calls to be analyzed as robocalls include calls from a single originator or source to an unallocated target telephone numbers. These are likely misdialed numbers as there are likely to be many calls to unallocated target telephone numbers from the same telephone number or originating callee or source for a robocaller. Another determining factor can be how long the caller stays on the line, for example if there is a hang up or termination by the caller within a threshold period of time then the call can be designated as unlikely to be a robocall. The target telephone number could be to a recently disconnected target telephone number in which case the call may be a legitimate call by someone who is unaware the number has been disconnected. To avoid such instances, a threshold amount of time from when the target telephone number became an unallocated telephone number might be used (e.g., 2 years). In another instance, legitimate automated calling campaigns such as from schools notifying of closures or government agencies such as for example from the police providing emergency notifications such as evacuation instructions, issues with water supply contamination, etc. may, and in some embodiments are, identified by the source or originating telephone number or other source identifying information. In some embodiments, determinations of whether a SIP call to unallocated numbers is a robocall is done by playing back or presenting in text form the contents of one or just a couple of recorded calls that have been identified from a campaign to a user and then receiving input from the user as to whether all calls identified as corresponding to the campaign are to be flagged as robocalls or as legitimate calling campaigns. The information about the recorded calls can also be compared with other datasets such as complaints filed with respect to spam calls or fraud calls identified by subscribers to the network and even calls which have been recorded by users or forwarded by users who have identified the calls as being robocalls.

While these various determinates are possible, most embodiments of the invention focus on identifying robocalls from the content of the media of the SIP call to an unallocated target number and then using this information to identify robocall campaigns with similar messages. Based on the identified SIP calls belonging to a robocall campaign, signaling characteristics of robocalls are then identified and applied to future SIP calls to make a determination as to whether or not future SIP calls are robocalls and perform one or more mitigation operations on the SIP calls determined to be SIP robocalls. The determination may be made as a score representing a probability the call is a robocall with the mitigation action to be taken based on the score. For example, a score indicating a likelihood or probability that the SIP call is below a first threshold may result in no mitigation action, equal to or above the first threshold but below a second threshold may result in a first level mitigation action such as notifying the target of the SIP call during the presentation of the SIP call to the target (e.g., message indicating potential robocall, audible message prior to connecting the robocall, different ring pattern for potential robocalls), and the score being equal to or above the second threshold may result in call being sent to a prescreening service or termination of the call.

However, as previously discussed, using unallocated target telephone numbers for identifying SIP calls to record for analysis has the advantage over other determinants in that it is a determinant with an increased likelihood that the call being recorded is a robocall and also provides a legal justification for recording the call. Since the unallocated target telephone numbers are technically "owned" by the network or a service provider of the network, calls made to those numbers can be recorded in one-party-consent states since the service provider gives implied consent to the recording of the call. Additional justifications can also be applicable for a recording done by a service provider in the pursuit of reducing SPAM on the service provider's network, as authorized by various Federal Communications Commission (FCC) directives.

While all calls (e.g., SIP calls) to unallocated target telephone numbers may be recorded, in various embodiments only a faction of such calls will be redirected to the recording device/entity (e.g., Recorder 114) for example as a practical matter to match the recording to the engineered recording capacity of the recording device/entity. This has been described above with respect to the Policy and Routing server and/or the communications processing device making the decisions on which SIP calls to unallocated target telephone numbers are to be routed to the recording device/entity (e.g., recorder 114 of system 100). In various embodiments, the determination of which unallocated numbers are to be routed to the recording device/entity also takes into account one or more of the factors discussed above with respect to determinates for identifying robocalls such as, for example, how long the number has been out of service or unallocated, the telephone number of the calling party/originator/source of the call, and the number of calls within a time period that are directed to the unallocated number. The calls to unallocated numbers which are not to be recorded are terminated typically after playing an announcement indicating that the target number is not in service or has been disconnected. In some embodiments, the unallocated number response for an unallocated number which is not to be recorded includes a routing path to an interface on the recording device (e.g., recorder 114) or another device which plays back the "not in service" or "disconnected number" announcement and then terminates the call. In such cases, the communications processing device egresses the call using the routing path identified in the unallocated number response to send it to the interface on the recording device or another device which will playback the message and terminate the call.

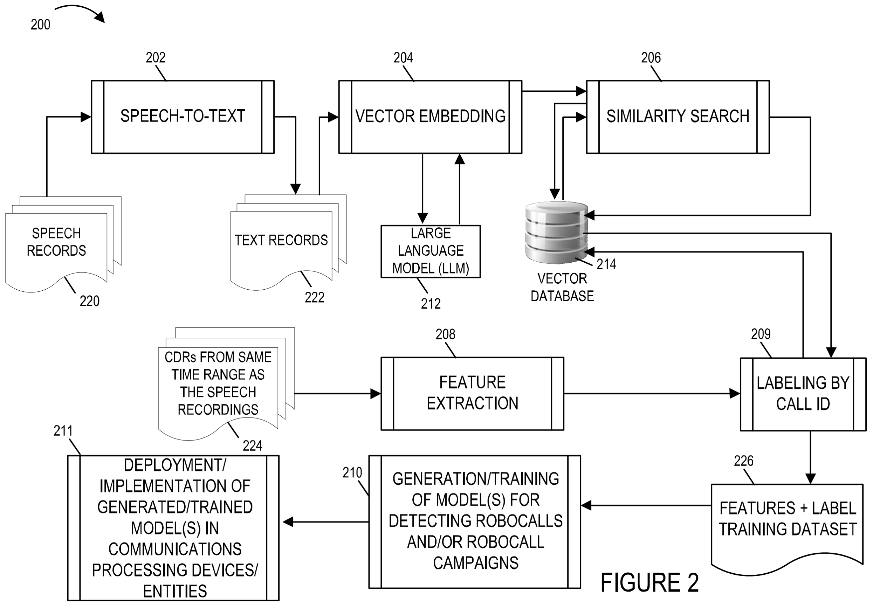

Figure 2 illustrates a method 200 for processing call information including recordings (e.g., call recordings) and call detail records and/or trace records in accordance with an exemplary embodiment of the present invention. The method 200 is illustrated in the form of a pipeline process. The method 200 may be, and in some embodiments is, implemented by the exemplary system 100. It will be understood that the method 200 is not limited to be implemented by the exemplary system 100 but may be implemented on other systems and/or devices. In some embodiments, the steps of the method 200 are implemented by the analytics system 130 of system 100 with the speech records and call information being obtained from the database 116 and/or from the call processing devices of system 100.

In some embodiments, each step of the method 200 or a combination of steps of the method 200 are performed by a module, component or application (e.g., POD of a Kubernetes system) of the analytics system 130. In some embodiments, one or more steps of method 200 are performed by separate devices or entities. The method 200 is described in terms of a recording that has been stored and is later processed but the invention also covers embodiments in which the analytics system 130 receives the unallocated call and directly processes the media content as it is received. In such cases, the recording device is not necessary as the analytics system immediately ingests the media content (e.g., audio from the calling party which would be for example a robocaller).

The method 200 starts in step 202 with a speech-to-text component of the analytics system 130 ingesting speech records 220 corresponding to unallocated calls from the database 116 and producing textual transcripts of the recordings in the form of text records 222 which are communicated to a vector embedding component 204 of the analytics system 130. Each of the ingested speech recordings includes a call identifier (e.g., a number including the target unallocated telephone number, a date and timestamp, a Session Initial Protocol call_id, or other call identifying information) and the media content that was recorded for the call. Each of the produced text records includes a textual transcript of the call and the call identifier for the call. Operation proceeds from step 202 to step 204.

In some embodiments, text matching such as that used in document matching can be used in which the words are converted into word encodings and then a Term Frequency - Inverse Document Frequency (TF-IDF) algorithm or a similar algorithm is used to determine the significance of words or phrases based on the number or frequency of the word or phrase that appears in the document while taking into account the use of the word or phrase in general. However, while such algorithms perform well for documents with large numbers of words where there is statistical significance to the presence of uncommon words relative to common words, this is not the case with respect to robocalls in which the robocall transcripts are typically, and from experience analyzing recorded robocalls almost always are, less than 100 words and often much less. Frequency based discriminant algorithms such as TF-IDF are not designed for this short text robocall use case and their use in detecting similar but not identical robocall recorded language is limited and sub-optimal.

While in theory an entire Large Language Model (LLM) such as Chat-GPT from OpenAl, Llama from Meta, Gemini from Google, or Claude from Anthropic could be used to determine if two text phrases are effectively the same in response to a query such as "Can you tell me if the following two text phrases are talking about the same topic?" and then providing the two text phrases, this is not a practical solution. LLMs are incredibly resource intensive and take quite long (relative to typical computer algorithms) to ingest the question and produce the answer. Furthermore, this approach is fundamentally a binary match (is A the same as B) rather than what is actually desired (what text phrases, messages, and/or records are very similar to text message A). This has severe consequences for the algorithmic run-time of a tagging or labeling algorithm.

However, internally LLMs include encoding and decoding portions of the neural network. In most cases however, both encoding and decoding portions are only present during the training of the LLM. Chat-GPT, for example, is a decoding only architecture when used for inference. The encoding portion creates a semantically compact encoding of the ***meaning*** of the text (along with the self-attention vectors that hint at the important areas of the text). The decoding portion uses the encoded content and the self-attention to determine the most likely (i.e., reasonable) sequence of text that could follow that content. The critical aspect of this is that the encoding aspect of an LLM produces a vector embedding that captures the ***"meaning"*** of the text and which allows efficient semantic matching. This turns out to be, relatively speaking, a low resource requirement portion of the LLM architecture and, fortunately, all that is needed for the present use case in which we have text records of 100 words and wish to determine their similarity based on the intent or meaning of the text.

In step 204, a vector embedding module or component of the analytics system 130 receives the text records 222 from the speech-to-text component and creates and/or generates a vector embedding of the text transcript using a simple embeddings-only LLM 212. Vector embeddings are a way to convert words and sentences from the text transcript that capture their meaning and relationships (including syntactic relationship of the words in the text) in the form of a vector of numbers. Embeddings are vector representations of high-dimensional data. The embedding vector created and/or generated is a numerical representation of words, phrases and/or sentences in the text transcript based on the semantic and syntactic relationship between the words, phrases and/or sentences. In various embodiments, the vector embedding module or component includes the embeddings-only LLM which creates the vector embedding of the text transcript. Examples of pre-trained embeddings-only LLMs which are currently available include: (i) Titan G1 from Amazon Web Service (AWS), (ii) text-embeddings-3 from OpenAl, and (iii) voyage-01 (VoyageA1). Each of these pre-trained embeddings-only LLMs produces a vector of numbers, with the vector size depending on the embedding LLM used (a vector size of 1536 is produced by the Titan G1 LLM, a vector size of 1024 is produced by the text-embeddings-3 LLM, and a vector size of size 1024 is produced by the voyage-01 LLM). And, as explained above the vector of numbers captures the "meaning" and relationship (e.g., syntactic relationship) of the words, phrases and/or sentences in the text transcript. The vector embeddings module or component outputs or passes the embedding vector, the source text from the transcript record, and the call identifier (also from the transcript record) to a similarity search module or component. Operation proceeds from step 204 to step 206.

In step 206, a similarity search module or component of the analytics system 130 receives the embedding vector, the source text from the transcript record, and the call identifier from the vector embedding module or component and using the provided embedding vector performs a similarity search for the N closest (semantic) vectors stored in the embedding vector database 214, N being a positive integer. This is sometimes called a vector database search or query. Similarity between embedding vectors is measured using a distance metric such as for example cosine similarity, Euclidean distance, and/or Manhattan distance. The similarity search includes comparing the received embedding vector for the text of the call under evaluation to other embedding vectors in the embedding vector database 214 to determine the N closest (semantic) vectors in the vector database 214. For example by determining the embedding vectors in the vector database with the smallest Euclidean distance of separation to the received embedding vector for the text for the call being evaluated, effectively this similarity search finds other entries (e.g., embedding vectors for other calls to unallocated numbers) that are closest in meaning to the current text of the call being evaluated. This is sometimes implemented using a vector query or search. The responses or search results include the N closest matching embedding vector entries along with a score for the match and metadata stored along with the matching embedding vector. The score is a value between 0.0 and 1.0, with a 1.0 indicating a guaranteed match (typically, exact textual match). The embedding vector entry with the highest scoring match to the received embedding vector for the text under analysis is checked against a score threshold (e.g., 0.8) and, if the score is above the score threshold value, a campaign identifier from that matching embedding vector entry is used to label the call being evaluated. If there are two or more embedding vector entries having the same highest scoring match, then one of the two or more embedding vector entries is selected as the highest scoring embedding vector entry, and if the score is above the score threshold value, then the campaign identifier for this selected embedding vector entry is used to label the call being evaluated. In various embodiments, this selection of the highest scoring embedding vector entry from multiple matching entries with the same highest score is done by random selection (i.e., one of the two or more embedding vectors with the same highest score is selected randomly to be the highest scoring embedding vector). Each of the embedding vectors in the database will have an assigned campaign identifier which is included as part of the embedding vector entry in the vector database. The steps 202, 204 and 206 have been explained for a single call; when batch processing of speech records for calls is implemented the steps 202, 204 and 206 are repeated for each of the speech records 220 of the batch of speech records 220. Operation proceeds from step 206 to step 208 after the completion of the processing of the speech record(s).

In various embodiments, the score threshold value is determined during an initial training/configuration phase of operations and that score threshold value is then used in all later searches until changed. When the highest scoring match is equal to or below the score threshold value, or there are no matches returned, then this is a previously unseen robocall campaign, and a new campaign identifier is generated for the call being evaluated. For either case, the embedding vector, the campaign identifier, and the call identifier for the call being evaluated are then saved to the vector database 214 for use in comparing/matching of this call to future calls. In some embodiments, the text record 222 including the transcript for the call is also stored in the vector database 214. In some embodiments, the speech record 220 for the call, the text record for the call 222, the call identifier for the call, and the campaign identifier for the call are stored in the vector database 214 for future reference.

In some embodiments, the vector database 214 is part of the analytics system 130. In some embodiments, the database 116 is used for storing the embedding vectors instead of a separate database while in some other embodiments, the vector database 214 is a separate database system or storage device coupled and/or connected to the analytics system 130.

In some embodiments, the similarity search module or component stores and/or writes the call identifier, the campaign identifier, the embedding vector and the first K words of the text to database 216, e.g., in a record keyed by the call identifier, K being a positive integer value such as for example 100. Keeping only the first K words of the text allows for the saving of storage space as opposed to keeping the entire transcript of text for the call. The value K may be, and in some embodiments is, determined based on the storage capacity available and/or the cost of the storage, the typical length of the robocall message, and/or an amount of the message needed to determine whether it is associated with a robocall campaign. For example, robocall messages may repeat the same message multiple times and only 1 capture of entire message that is repeated during the call is important for analysis. The K words are typically kept for later use such as for example when a manual evaluation is to be performed by a human user who for example wishes to evaluate the effectiveness of the campaign identification by comparing the first K (e.g., 100 words) of the text of different identified calls of a campaign to one another to determine whether the human user would reach the same conclusion as the similarity search that the calls are part of the same robocall campaign or would reach a different conclusion.

In some embodiments, the text and/or audio of the call is also processed for sentiment analysis (urgent-sounding, neutral) and/or for the presence of specific keywords such as for example IRS, auto warranty, and Google listing. The results of these additional analyses are then saved as meta-data along with the call for use in later decision making, training and/or generation of models, applications, and/or devices that can identify, classify, or detect calls as being robocalls.

Not all the entries in the vector database are necessarily "True Positives" for being robocalls or unwanted calls. Some entries may be single entries indicating misdials. Some may be valid campaigns from a school, government entity (e.g., police or fire department), or a political entity. Campaigns with a call count below some threshold can be pruned or removed after a period of time and/or before a next batch run when the calls are new or the calls are being processed in batches. Additionally, the text transcript for the calls and/or the first K words of the text for each of the calls in the database is available and can be used for manual human evaluation of the text to determine whether a particular campaign is "allowed" and therefore to be removed or pruned out from the vector database for example by the analytics system 130 presenting the K words of the text of the call on a display device or printed out in a report and receiving from a huma evaluator and input indicating whether the particular campaign corresponding to the text is "allowed" or not. While the use of manual human evaluation might seem to defeat the intent of a highly automated system, note that since the calls are already grouped, human evaluation would only be at a campaign level, not per call level with a single call of the campaign being evaluated. Additionally, in some embodiments additional factors can be used to determine the confidence level that a campaign is a robocall campaign and then human intervention only invoked for those with a low confidence level. For example, campaigns including calls in which specific words and/or phrases are included which are indicative of allowed campaigns such as "school closing", "evacuation", "safety", "weather emergency", "election", "police department", "evacuation" may be assigned a low confidence score and/or identified for human evaluation.

In step 208, call information (e.g., Call Detail Records or Trace Records which include the call identifier for the calls from the same time range as the speech recordings 220 is ingested by a feature extraction module or component of the analytics system 130 which extracts features of each of the calls that may be, and in some embodiments are, useful for further classification. This call information includes information for calls for which speech record(s) 220 were generated (e.g., calls with unallocated telephone numbers) as well as calls which were egressed to valid targets (e.g., communications devices with the assigned target telephone numbers). These extracted features include, for example, overall call parameters, such as for example ingress trunk group name, signaling peer Internet Protocol (IP) network, and calling number prefix. The extracted features may, and in some embodiments does, also include aspects of the Session Initiation Protocol (SIP) signaling on the received SIP INVITE when the call is a SIP call. The SIP signaling features on the received SIP INVITE message includes for example which headers are included in the SIP INVITE message, which header parameters are present, the content of the User-Agent header, etc. It should be noted that not all of these features will be actually useful. However, the feature extraction should be liberal in choosing features for extraction as irrelevant features may be, and in some embodiments are, subsequently removed during model training. The call identifier for the call and the extracted features of the call are communicated and/or passed from the feature extraction module or component to a labeling module or component of the analytics system 130. Operation proceeds from feature extraction step 208 to labeling step 209.

In labeling step 209, the labeling module or component of the analytics system 130 receives the extracted features and call identifier for each of the calls from the feature-extraction module or component of the analytics system 130. It looks up in the call identifier in the database 214 and, and when an entry or record with the call identifier is found, it retrieves the campaign identifier stored in the database 214 entry and/or record with the call identifier. As previously discussed the record with the embedding vector, call identifier, campaign identifier and other information (e.g., meta data and/or K words of the text) for the call are stored in the database 214 and are keyed by the call identifier which may be, and in some embodiments is, one of the following: (i) the unallocated target telephone number of the call in combination with some other discriminant(s) (such a timestamp), (ii) a SIP call Id, or (iii) an identifier generated based on the unallocated target telephone number of the call or the SIP call id. The labeling module or component then creates/generates and outputs a "POSITIVE" record (e.g., one of the records 226) comprising the call identifier, the extracted features for the call, and the campaign identifier. This record is stored for example in the analytics system or a database (e.g., database 116) and is one record of a features + label training dataset 226. In step 209, when an entry is not found in the database 214, that is there is no entry or record in the database having the call identifier, the labeling module or component creates/generates and outputs a "NEGATIVE" record which includes the call identifier, the extracted features for the call with the call identifier, and a campaign identifier have a NULL value. This record is stored for example in the analytics system or a database (e.g., database 116) and is one record of the features + label training dataset 226. Each record of the training dataset therefore has a label of NEGATIVE or POSITIVE along with the extracted features. An entry or record may not be found in the database 214 because it may not have been initially identified as a robocall (e.g., it is a call with a target telephone number which has been allocated) or the call was filtered, removed or pruned, e.g., because it determines to be a misdialed call or was a part of allowed calling campaign (e.g., school closing call campaign).

Operation proceeds from step 209 to step 210. In step 210, a model generator/trainer of the analytics system 130 uses the features + label training dataset 226 to generate and/or train one or more model(s) (e.g., classifier model(s) such as neural network classifier models or application(s)) that can identify, detect, and/or determine the likelihood or probability that a received call at a call processing device is a robocall or part of a robocall campaign based on the call's signaling features (e.g., signaling features included in a SIP INVITE message and/or SDP offer message for the call such as for example headers included in the SIP INVITE message, content of the headers, and ordering of the headers) and/or SDP information such as contents of the session description, media description, and/or time description included in the SDP offer message. In some embodiments, the signaling features used to determine whether a call is a robocall or part of a robocall campaign does not include the calling party telephone number. In some such embodiments, the analytics system 130 generates a robocall calling party number list using the "POSITIVE" records of the features + label training dataset by identifying each of the calling party telephone numbers (the calling party telephone numbers having been extracted during feature extraction but not used for model generation or training) and assigning the telephone number a confidence score or probability score based on the number of "POSITIVE" entries in the training dataset with having the same campaign identifier as the calling party telephone number. In some such embodiments, the robocall calling party telephone number list is used by communications processing devices to identify calls with calling party telephone numbers matching entries on the robocall calling party number list to make a determination as to whether a call is a robocall and for calls with calling party telephone numbers which are not on the robocall calling party telephone number list using a robocall detection model that has been trained on signaling features which do not include the calling party telephone number to detect the likelihood or probability that the call is a robocall (e.g., by providing a confidence score that the call is a robocall). In some embodiments, calls with calling party telephone numbers on the robocall calling party number list are also tested by the robocall detection model and the likelihood or probability score generated is combined with the prior confidence score. The combined score then being used to determine an appropriate mitigation action to be taken.

In some embodiments, a plurality of robocall detection models are generated and trained with at least some embodiments being trained to identify calls which are part of a specific robocall campaign. In such cases, the features + label training dataset is parsed to identify the "POSITIVE" records which have a specific robocall campaign identifier and those records as well as "NEGATIVE" records are used in training a specific robocall campaign detection model for the robocall campaign with the specific robocall campaign identifier. Each of the robocall campaign identifiers is unique. Operation proceeds from step 210 to step 211.

In step 211, the generated and trained model(s) are deployed to one or more call processing devices (e.g., one or more or all or any combination of the plurality of call processing devices 104 of system 100) where the model(s) are used to detect the likelihood or probability that a call is a robocall (e.g., by generating a confidence score or probability that the call is a robocall) and to take a mitigation action such as notifying the customer of the potential for the call to be a robocall, forwarding the call to a pre-screening service or terminating the call, the type of mitigation action in various embodiments being determined based on the confidence or probability score provided by the generated and trained model for identifying, detecting, and/or determining robocalls. In some embodiments, the output of the generated and trained model is not a score but a binary decision indicating that the call is either a robocall or not a robocall. This deployment of the generated/trained model and information 135 is shown in Figure 1. It should also be noted that the analytics system 130 may also generate a robocall calling party telephone number list and/or other calling party identification information which is deployed to communications processing devices. The particular generated/trained model or models which are deployed and/or implemented by a communications processing device can vary with some communications processing devices implementing all of the models and other implementing a combination of one or more of the models when multiple or a plurality of models have been generated. For example, different models can be generated for different robocall campaigns or types of robocalls campaigns and sold to customers (e.g., service providers or enterprises as separate modules).

The method 200 is repeated as additional calls are processed (e.g., as additional calls are received by the communications processing devices of system 100) and the generated models are updated with new and/or supplemented training datasets to detect new robocalls and robocall campaigns. As previously discussed, the method 200 can be run in batches when a significant number of new speech records have been collected or as an on-going stream process as new calls and speech records are constantly being received and processed in stream.

It is to be noted that the features + label training dataset 226 is likely to be skewed towards NEGATIVE records (which will result in negative test cases). That is there are more legitimate calls than robocalls in the calls being used to generate the training dataset 226. Rebalancing by either (down) sampling from the NEGATIVE records/test cases or over-sampling from the POSITIVE records/test cases is utilized during the generation/training of the model (e.g., a classification model such as for example an artificial intelligence machine learning classification model) for identifying, detecting and/or determining the likelihood and/or probability a call is a robocall or part of a robocall campaign.

In some instances, when the sampling size of the "POSITIVE" records in the training dataset is not sufficient because the capture time and/or the recording resources have been limited, another embodiment of the invention can be used to bootstrap/generate a potentially much larger training dataset from the limited number of samples being captured.

In such embodiments, components and/or modules in one or more of the communications processing devices 1 106, 2 108, . . ., N 110 of the plurality of communications processing devices 104 randomly samples 0.5% of calls and computes a digital communications fingerprint of the first portion (e.g., 60 seconds) of media (audio content) of the call. This fingerprint is then saved in a trace (TRC) record for the call. This applies to all calls received by the call processing device rather than just calls to unallocated numbers. According to robocall tracking companies such as Hiya and YouMail, between 10% to 25% of calls in the United States are robocalls. Consider a service provider processing or connecting/terminating just 100M calls per week (about 500 call per second (cps) busy hour call attempts (BHCA)). Using a sampling of 1 in 200, and a robocall percentage of 10%, this sample can be expected to contain more than 50,000 robocalls. If the number of "POSITIVE" cases based on the recordings is significantly less than this then model training might be improved with the bootstrapping process.

A digital communications fingerprint also referred to as a communications media fingerprint, media fingerprint, call fingerprint or just a fingerprint herein is a media signature for a communication, in this case a call. The media of the call is a digital representation of the audio that lends itself to the domain of digital signal processing. From the audio, the frequency characteristics can be extracted into a "fingerprint" of the audio. For example, in some embodiments the audio stream from the call is segmented, with overlap between adjacent samples. A Discrete Fourier Transform (DFT) is then computed on each sample. The DFT points are then filtered, and some number of peaks identified. These tuples of peaks and their associated timing then form the basis of the communications media fingerprint. The purpose of the communications media fingerprint is to be able to check whether a media stream A is the "same" as media stream B without actually comparing the media streams. In the present case, the comparison is between recorded portions of a call (e.g., first 60 seconds). One or more or all or any combination of the communications processing devices of system 100 may generate trace records which include communications media fingerprints for a portion of the call (e.g., the first 60 seconds) or the entire call. These communications media fingerprints which are generated for a percentage of all calls processed by the communications processing device can be used as described in method 300 to identify and label additional calls as "POSITIVE" robocalls which were part of a robocall campaign but were not directed to a target with an unallocated telephone number but instead were directed to targets with allocated telephone numbers.

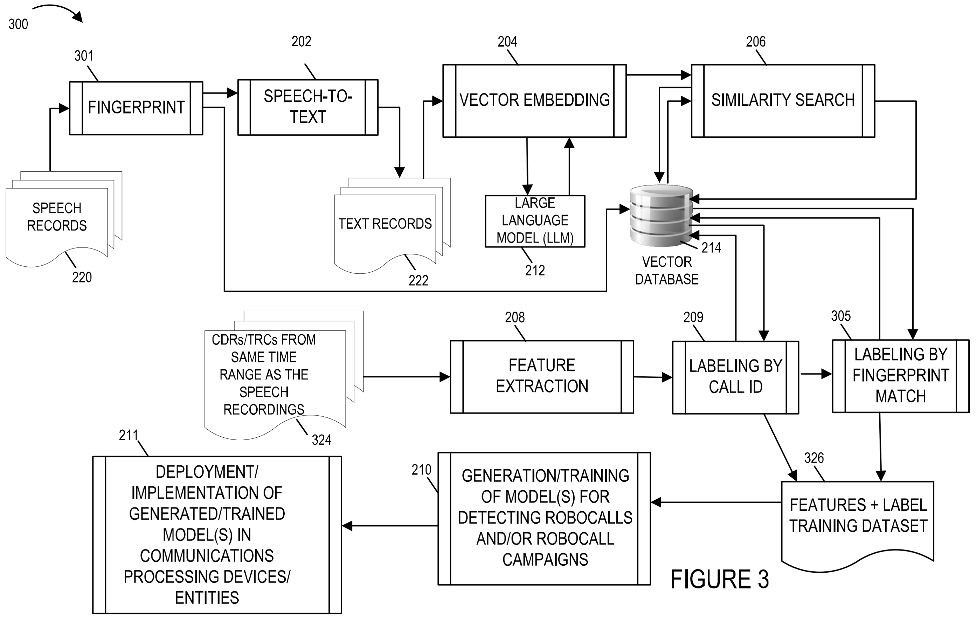

Figure 3 illustrates a method 300 for processing call information including recordings (e.g., call recordings) and call detail records and trace records in accordance with an exemplary embodiment of the present invention. The method 300 is illustrated in the form of a pipeline process. The method 300 may be, and in some embodiments is, implemented by the exemplary system 100. It will be understood that the method 300 is not limited to being implemented by the exemplary system 100 but may be implemented on other systems and/or devices. In some embodiments, the steps of the method 300 are implemented by the analytics system 130 of system 100 with the speech records and call information being obtained from the database 116 and/or from the call processing devices of system 100.

Elements or steps with the same reference numbers used in different figures are the same or similar and those elements or steps will not be described in detail again. The exemplary method 300 is similar to the method 200 previously described. The changes from the method 200 include the addition of a media (e.g., audio) fingerprinting step 300 and a labeling by fingerprint match step 305 which will be discussed below. Additionally, instead of Call Detail Records from the same time range as the speech records 224, Call Detail Records and Trace Records from the same time range as the speech recordings 220 are input to the feature extraction module 208. The features + label training dataset 326 will have more "POSITIVE" entries than the features + label training dataset 226 as additional matches for calls are determined by the labeling fingerprint match step 305.

The method 300 starts in step 301 where a fingerprinting module or component of the analytics system 130 generates or creates a media fingerprint for the call from a portion of speech recording of the call (e.g., the first 60 seconds of the speech recording of a call) including in the speech record 220 which may be obtained from the database 116. The portion of the speech recording used for generating the media fingerprint is the same as used to generate the media fingerprint for the call included in the trace record for the call which in this example is created by the communications processing device that handled the call. The portion of the call can be the entire call. Further information on how to generate media fingerprints (e.g., audio media fingerprints) for calls can be found in U.S. Patent Application No. 17,882,447 entitled, "METHODS AND APPARATUS FOR GENERATING AND/OR USING COMMUNICATIONS MEDIA FINGERPRINTS" filed on August 5, 2022 and which published as U.S. Patent Application Publication No. : US 2023-0386484 A1 on 11/30/2023. The generated and/or created communications media fingerprint is stored in a record in the database 214 along with the call identifier for the call to which the media fingerprint corresponds, the call identifier being for example a number including the target telephone number, a numerical date and timestamp or a SIP call_id as previously discussed in connection with method 200. Operation proceeds from fingerprint step 301 to speech-to-text step 202. In speech-to-text step 202, the speech record for the call is ingested and a text transcript is generated from the audio recording as previously described. In some embodiments, the fingerprint module or component passes the speech record for the call to the speech-to-text module or component for ingestion while in some other embodiments, the speech-to-text record is obtained in the same manner as discussed with respect to method 200 for example from the database 116 and/or directly from the recorder 114. Operations of the method 300 with respect to steps 202, 204, 206, 208, 209 are the same as or similar to the operations described for these steps in connection with method 200. However, the record generated and stored in the database 214 with the media fingerprint for the call may, and in some embodiments is, also used for storing the embedding vector for the call and the other information for the call (e.g., the text of the call or the first K words of the text of the call) and the campaign identifier for the call as discussed in connection with method 200.

Operation of method 300 proceeds from feature extraction step 208 to the labeling by call identifier step 209. As previously described in connection with step 209 in method 200 in this step, the call identifier for the call is used to search database 214 to determine whether a record for the call exists and if so what campaign identifier has been assigned to the call, this information being included in the records stored in database 214 which are keyed by call identifiers. When a record corresponding to a call identifier is found a features + label record is generated as previously described which includes the label "POSITIVE" and is stored in the features + label training dataset along with the extracted features from the call, the campaign identifier, the text of the call (or the first K words of the text), and the call identifier. Operation of method 300 proceeds from step 209 to generation/training of model(s) for detecting robocalls and/or robocall campaigns step 210 bypassing or skipping the labeling by fingerprint match step 305. However, when no record having a matching call identifier for the call is found in the database 208, after a "NEGATIVE" labeled record is generated for the call with a campaign identified being set to "NULL" as discussed in connection with method 200 it is passed to a labeling by fingerprint match module or component of the analytics system 130 and operation proceeds to step 305. In step 305, the communications media fingerprint for the call whose features where extracted in step 208 is obtained (e.g., from the trace record for the call 324 based on the call identifier for the call from the database 116 or from the feature extraction module or component and/or the labeling by call identifier module or component which pass the CDR/TRC records after completing there processing in connection with the call).

In labeling by fingerprint match step 305, the labeling by fingerprint match module or component of the analytics system 130 performs a fuzzy communications media fingerprint matching search in which it compares the communications media fingerprint from the trace record and the communications media fingerprints generated in step 301 and stored in the records of the database 214 to determine if there is a match. When there is a match, the labeled record for the call is updated to change "NEGATIVE" to "POSITIVE" and the campaign identifier is changed from "NULL" to the campaign identifier in the record with the matching communications media fingerprint. Note that there may be multiple matches as for example multiple robocalls in the same campaign are likely to have matching fingerprints which match when fuzzy fingerprint matching is performed. The algorithm can use the closest match or the first match. Using the first match uses less resources and is highly likely to result in the same campaign identifier as the closest match and so it is preferred in most cases.

In various embodiments, the search for a matching communications fingerprint is performed in the following manner. First, the communications fingerprint to be matched is compared for an exact match to each of the communications fingerprints included in the database 214. When an exact match is found the operation ceases and the campaign identifier corresponding to the matched fingerprint in the database 114 is utilized for creating the labeled record for the call. However, if no exact match is found when communications media fingerprint for the call is compared to the communications media fingerprints in the database 214, the communications media fingerprint from the trace record is expanded into a fingerprint "locale", a fingerprint locale being a set of fuzzy fingerprints based on the communications media fingerprint from the trace record. Each of these fuzzy fingerprints is then compared to the communications media fingerprints in the database 214 and if an exact match is found then a fuzzy match is determined and the campaign identifier from the record in the database with the matching fingerprint is used in the labeled record. When no match is found the labeling by fingerprint match module or component of the analytics system outputs the previously generated record for the call which includes the label "NEGATIVE", the call identifier, the extracted features, and a campaign identifier of "NULL". Operation proceeds from step 305 to the generation/training of model(s) for detecting robocalls and/or robocall campaigns which is implemented as previously described in connection with method 200 and from step 210 operation proceeds to the deployment/implementation of generated/trained model(s) in call processing devices/entities which is implemented as previously described in connection with method 200.

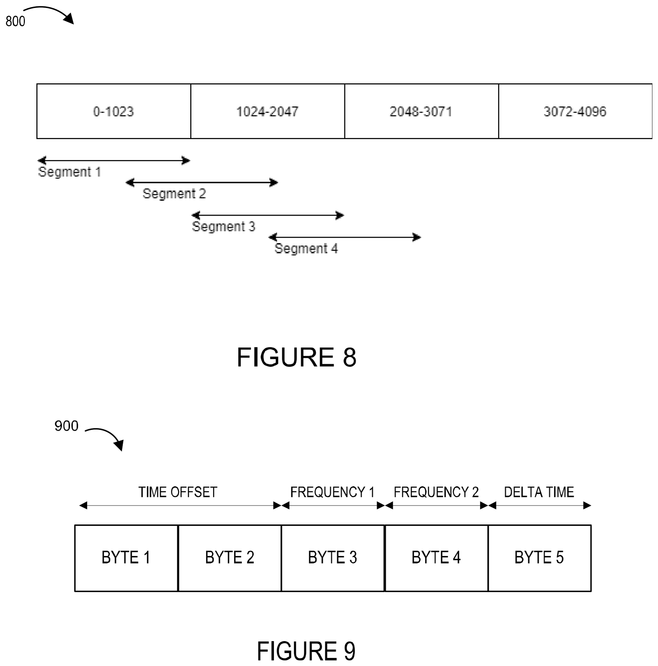

In some embodiments, a labeling module or component performs both steps 209 and 305 in which case the labeled record 326 is only generated, outputted and stored (e.g., in database 116) at the conclusion of the processes of steps 209 and 305. Additional details regarding communications media fingerprints are discussed below in connection with Figure 8 and 9. In some embodiments, the communications media fingerprints are generated and matched, e.g., using fuzzy fingerprint matching, as described in U.S. Patent Number 12,015,737 entitled, "METHODS AND APPARATUS FOR GENERATING AND/OR USING COMMUNICATIONS MEDIA FINGERPRINTS" which issued on June 18, 2024.

In some embodiments, the communications media fingerprints are generated and matched, e.g., using fuzzy fingerprint matching, as described U.S. Patent Application No. 17,882,447 entitled, "METHODS AND APPARATUS FOR GENERATING AND/OR USING COMMUNICATIONS MEDIA FINGERPRINTS" filed on August 5, 2022 which published as U.S. Patent Application Publication No.: US 2023-0386484 A1 on 11/30/2023.

As discussed, the fuzzy media fingerprint matching will result in matching tests or comparisons being performed for a plurality of fuzzy fingerprints against a plurality of recording entries and in some instances potentially all of the fingerprint records stored in the database 214. This matching algorithm is expensive algorithmically as it is a fuzzy match. Consequently, this process is most useful when the number of recordings captured is very small relative to the number of calls with communications media fingerprints. If there are already sufficient entries from just the speech recordings, then the labeling is most efficient when it is based solely on the information from the speech recordings.

Figure 4 illustrates an exemplary computing entity/node/device/system in accordance with an embodiment of the present invention and will be discussed in detail below.

Figure 5 illustrates an exemplary assembly of components for a computing entity/node/device/system in accordance with an embodiment of the present invention and will be discussed in detail below.

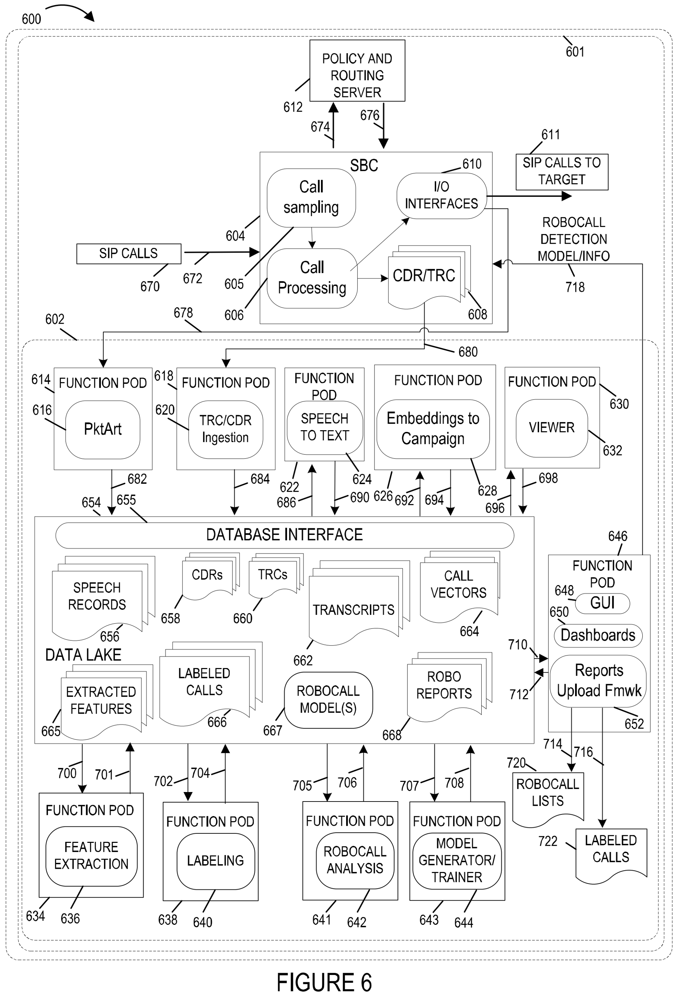

Figure 6 illustrates an exemplary system 600 and a software pipeline illustrating the flow of information/data between components of the system 600 as well as processing steps and/or operations using the exemplary system in accordance with an embodiment of the present invention.

The system 600 in Figure 6 performs a variety of operations including, among other things, the processing of incoming calls (e.g., SIP calls), generation of robocall campaign datasets, generation and training of robocall detection classification model(s) using the robocall campaign datasets, detection of robocalls and/or robocall campaigns using the trained model(s) and performing mitigation operations and/or actions in response to the detection of robocalls and/or robocall campaigns by the trained model(s).

Descriptions of Session Initiation Protocol (SIP) messages is described in the "SIP: Session Initiation Protocol" Request for Comment 3261 published June 2002 by the Internet Engineering Taskforce (IETF) and last revised January 21, 2020. Descriptions of Session Description Protocol messages are described in the "SDP: Session Description Protocol" Request for Comment 8866 published January 2021 by the Internet Engineering Taskforce (IETF). Features of SIP and SDP messages are also described in U.S. Provisional Patent Application No. 62/817,548 filed on March 13, 2019. Descriptions regarding the contents of exemplary Call Detail Records are included in U.S. Provisional Patent Application No. 62/595,311 filed December 6, 2017.

The exemplary system 600 includes a communications network 601, an analytics system 602, a communications processing device 604 which is a Session Border Controller, and a policy and routing server 612. Calls (e.g., SIP calls), messages (e.g., routing requests and routing responses), models, and information (e.g., call detail records (CDRs), trace records, call signaling packet artifacts, robocall lists, and robocall reports) are communicated and/or transmitted between elements of system 600 via the communications paths 672, 674, 676, 678, 680, 682, 684, 686, 690, 692, 694, 696, 698, 700, 702, 704, 705, 706, 707, 808, 710, 712, 714, 716, and 718 as shown in Figure 6. The communications path may be, and in some embodiments are, communications links. The exemplary analytics system 602 in the exemplary system 600 is implemented on a Kubernetes system with the Function Pods 630 and 646 and the Function Pods 614, 618, 622, 626, 634, 638, 641 and 643 being Kubernetes Pods implemented on one or more Kubernetes nodes in a cloud environment or cloud system platform such as for example Amazon Web Services (AWS) cloud platform. In this example, each of the Kubernetes nodes in analytics system 600 are indicated by the same reference numeral as the Pod being implemented on the node. For example, numeral 618 of Figure 6 in such a system refers to the Kubernetes Node and Kubernetes Pod implementing the TRC/CDR ingestion function while the numeral 622 refers to the Kubernetes Node and Pod implementing the speech-to-text function. In some embodiments, multiple Kubernetes Pods can be implemented on a single Kubernetes node. For example, Kubernetes Pods 614, 620, 622 can be implemented on a single Kubernetes node. The cloud environment or system platform may be a private cloud environment or system platform or a public cloud environment or system platform.

The exemplary analytics system 602 includes a data lake 654. The data lake 654 is a storage device such as, for example, a database storage system. The data lake 654 supports vector searching (e.g., similarity searching using embedding vectors), and may be, and in some embodiments is, a cloud database storage system such as for example an AWS data lake with vector search capabilities. While the exemplary analytics system 602 includes a single data lake, separate databases can and are used in some embodiments with for example one data lake being for the storage of records, reports, training datasets, and models and a second storage system which is a dedicated vector database used for storing vectors (e.g., embedding vectors) and performing similarity searches. It should be understood that the specific nodes, Pods, functions and components shown as attached to the data lake 654 are only exemplary and different configurations of the nodes, Pods, functions and components are possible. Data lake 654 includes a database interface 655 used for inputted and outputting data.

The SBC 604 is an exemplary representative communications processing device being utilized by a customer (e.g., enterprise network customer or a service provider (e.g., Verizon, AT&T network customer)) in normal or regular customer usage (e.g., at a customer premises during business operations). The event/data records (e.g., Call Detail Records/Trace Records 608) from the SBC 604 are used by the analytics system 602 to generate robocall lists 720 of calling party numbers corresponding to robocalls, robocall reports 668 identifying different robocall campaigns, and labeled call data records 666 which are labeled records making up one or more training data sets used for generating and/or training robocall detection models 667 to identify robocalls and/or robocall campaigns (e.g., even when excluding the calling party telephone number from the signaling features, trained machine learning neural network classifier models can detect based on signaling information/features of the call whether the call is a robocall and/or part of a robocall campaign).

In some embodiments, the Policy and Routing Server (PSX) 612 is a centralized policy and routing server that provides a standards-compliant, multi-protocol solution providing a policy and call routing engine that works seamlessly in heterogeneous voice networks supporting Session Initiation Protocol (SIP), ENUM (E.164 Number Mapping (ENUM) standard), H.323 protocol, TDM (time division multiplexing), Signaling System 7/ Common Channel Signaling System 7 (SS7/C7), Intelligent Network/Advanced Intelligent Network (IN/AIN), and Internet Protocol Multimedia Subsystem (IMS).

As previously discussed, the analytics system 654 includes: Function Pods 630 and 646 and the function Pods 614, 618, 622, 626, 634, 638, 641 and 643. Each of the Function Pods and function Pods include one or more components for performing operations. In some embodiments, one or more of these components are implemented as one or more software containers or an application that performs a specific operation or function.

The function Pod 614 includes the PktArt component 616. The function Pod 618 includes the TRC/CDR ingestion component 620. The function Pod 622 includes the speech-to-text component 624. The function Pod 626 includes the embeddings to campaign component 628. The function Pod 630 includes the viewer component 632. The function Pod 634 includes the feature extraction component 636. The function Pod 638 includes the labeling component 640. The function Pod 641 includes the robocall analysis component 642. The function Pod 643 includes the model generator component 644. The Function Pod 646 includes a Graphical User Interface component 648, a Dashboards component 650, and a Reports and Upload Fmwk component 652. The Graphical User Interface component 648 provides a graphical user interface for the input and output of data/information/commands displayed on a screen or display device for use by an operator of the analytics system 602. The Dashboard component 650 provides a variety of information graphically on a screen or display device to the operator of the analytics system 602 including for example CDR information, TRC information, Robocall campaign information, information on state of various operations being executed (e.g., state of: generation of speech recording records for calls by the PktArt component 616, TRC/CDR ingestion by the TRC/CDR component 620, generation of transcript records by the text-to-speech component 624, generation of embedding vectors for text transcripts of calls by the embeddings to campaign component 628, feature extraction from call signaling by the feature extraction component 636, labeling of call records as POSITIVE indicating the record is for a robocall or NEGATIVE indicating the record is not for a robocall by the labeling component 640, robocall analysis being performed on labeled records, generation including training of model(s) using the labeled call records to identify, detect, and/or determine whether a call is a robocall based on signaling features of the call and in some embodiments, the signaling features excluding the calling party telephone number). The reports and upload component 652 generates reports and outputs the reports of robocall lists (e.g., lists of calling party numbers identified as belonging to robocallers and/or specific robocaller campaigns (e.g., to a display device or printer) and labeled call records 722 (e.g., labeled robocall campaign training dataset 722). The report upload fmwk 652 feature also outputs/deploys robocall detection model(s) and information (e.g., robocall calling party lists 718) to communications processing devices including the SBC 604 which implements the model(s) and uses the robocall information to determine whether future received calls (e.g., future SIP calls) are robocalls and/or part of a robocall campaign and to take mitigation actions in response to the detection of a call being a robocall (e.g., providing notification such as a message along with the call to the target of the call, terminating the call and not routing it to the target of the call, forwarding the call to a screening service).

The process comprises a continuously running data capture and a pipeline of steps for generating labeled records which form a robocall campaign training dataset, using the robocall campaign training dataset to generate and/or train one or more robocall/robocall campaign detection classification models (e.g., machine learning neural network model) which are then deployed to communications processing devices including the SBC 604. The initial data processing stages or operations include: (i) data capture and (ii) data ingestion. The data capture stage or operation includes sampling of event/data records. Exemplary event/data records include call detail records (CDRs) and trace records (TRCs) 608.

SIP calls 670 are received by the Session Border Controller (SBC) 604 via communication path 672. The SIP calls 670 are processed by the call processing component 606 of the SBC 604. As part of processing a received SIP call, the SBC generates a routing request message and communicates the routing request message via the communications path 674 to the policy and routing server 612. The routing request message includes information on the target or called party of the SIP call such as for example the called party telephone number also referred to as target number or target telephone number.

The Policy and Routing Server 612 receives the routing request message and based on the target number of the call included in the routing request message determines whether a valid routing path exits from the SBC 604 to the target (i.e., a communications device (e.g., phone) of a subscriber to which the target number has been allocated and/or assigned). When the Policy and Routing Server 612 determines that one or more valid routing paths to the target exists, the Policy and Routing Server 612 generates a routing response message including a list of valid routing paths to the target. When Policy and Routing Server 612 determines that a valid routing path to the target does not exist because the target number is an unallocated telephone number the Policy and Routing Server 612 generates a routing response message with a routing path to analytics system 602 (i.e., PktArt Pod 616 of analytics system 602). The Policy and Routing Server 612 then communicates the routing response message via communications path 676 to the SBC 604. In some embodiments, the Policy and Routing Server 612 uses additional criteria beyond the lack of a valid routing path (i.e., unallocated target number) for determining whether or not to send the routing path to the analytics system 602. In some embodiments, the Policy and Routing Server 612 also makes the determination based on how long the target number has been unallocated for example only sending routing information for the analytics system 602 when the target number has been unallocated for a threshold period of time (e.g., a year or two), consistent with users familiar with the number knowing that target number is no longer in service or associated with the subscriber to which it was previously allocated. The Policy and Routing server 612 has a list of unallocated numbers which have been out of service for the threshold period of time which it searches after determining that the target number is not allocated. In cases where additional criteria are applied, when the criteria has not been met, the Policy and Routing Server 612 generates a routing response message indicating that no route exists to the target and/or that the target number is unallocated. The routing response message is communicated via communications path 676 from the Policy and Routing Server 612 to the SBC 604 which made the routing request.

The SBC 604 receives the routing response message and determines how to route or handle the call based on the routing response. When the routing response message indicates that there is no route to the target number (i.e., the case where the target number is unallocated but has not met the other criteria for routing to the analytics system 602), the SBC 604 plays a message such as "the number you have dialed is not service" and then terminates the call. When the routing response is for a target number that is allocated, the SIP call 611 is egressed from a SBC 604 Input/Output Interface 611 along one of the valid routing paths (677) returned in the routing response message to a communications device of the target. When the routing response message includes the routing path to the analytics system 602, the SIP call is egressed via communications path 678 to the PktArt component 616 of function Pod 614. SIP calls routed to the PktArt 616 have been determined by the Policy and Routing Server to be unwanted robocalls. In some embodiments, the SBC 602 determines based on the calling party number of the received SIP call that the call is from a known robocaller telephone number and automatically routes the SIP call to the PktArt component 616 of function Pod 614 of the analytics system 602 without communicating a route request to the Policy and Routing Server 612. The SIP calls communicated to the analytics system 602 have been determined at this stage to be robocalls. Additionally, downstream processing may, and in some embodiments is, used to make an additional determination as to whether the call is part of permitted calling campaign (e.g., school closings, police or fire emergency messaging, political campaign) or is a robocall, a robocall in this context being a part of unwanted, unpermitted, and/or fraudulent calling campaign such as scammer calls.

As discussed above, in the exemplary embodiment of Figure 6, the Session Border Controller 604 generates call detail records and trace records 608. The call sampling component 605 of the SBC 604 samples CDR and TRC records generated during the SBC's processing of calls by the SBC 604's call processing component 606. Alternatively, tracing for calls of interest can be obtained using a trace filter. When a trace filter is employed, the SBC 604 generates trace records and CDRs for calls meeting a trace filter criteria inputted into the SBC 604. The generated CDRs and TRCs 608 are typically initially stored within a storage device such as memory located locally within the SBC 102.

The call sampling component 605 of the SBC 102 samples CDR and TRC records generated during the SBC 604's processing of calls by the SBC 604's call processing component 606. The call sampling component 605 randomly samples or picks a fraction --typically a very small fraction-- of calls (e.g., 0.5% of the SBC 604 processed calls). This sampling is done for the trace records. CDRs are generated for all received calls.

In some embodiments, the call sampling component 605 also determines a sampling rate for SIP calls to be routed to the analytics system 602 based on the processing and/or storage capacity of the analytics system 602. In some such cases, the SIP calls for which the routing response is a route to the analytics system 602 are sampled at a particular percentage of calls per time period (cps) and the remainder of the calls to be routed to the analytics system are played the "the number you have dialed is not service" and then terminates the call. In some embodiments, the Policy and Routing Server 612 includes a call sampling component that makes the determination as to what percentage of unallocated calls are to be routed to the analytics system 602 for example based on the analytics system 602 processing and/or storage capacity.

The SBC 604 generates call detail records for all SIP calls and the trace records which include the communications media fingerprints and/or information from which communications media fingerprints can be generated for a call are captured for a subset of the calls. The generated CDRs and TRCs 608 are typically initially stored within a storage device such as memory located locally within the SBC 604 and then communicated to the TRC/CDR Ingestion component 620 of the Function Pod 618 of analytics system 602 via communications path 680.

The PktArt component 616 of Function Pod 614 receives the SIP calls from the SBC 604 via communications path 678. The PktArt component 616 performs the function of a media server for playing out announcements and capturing incoming media (e.g., audio content). The PktArt component plays an initial greeting to a caller, and then captures the received media (e.g., the audio of the call which will include any robocall audio message). In this system, the calls routed to the PktArt component 616 by the SBC 604 are the received SIP calls that have been determined to meet the criteria for being determined to be a robocall (e.g., criteria being for example: (i) the calling party number has in the past been identified as a robocall, or (ii) the called/target party telephone number is an unallocated telephone number which has not been allocated for a period of time (e.g., a year). The caller in this case is usually a robocaller and the media captured is the audio message of the robocall. Upon answering the call, the PktArt component 616 plays a message such as "Hello. This call is being recorded" and then records the media (i.e., audio) for the call. The PktArt component 616 outputs the speech recording of the media for the call via communications path 682 storing the speech record for the call in the data lake 654 with the speech records 656, each speech record being keyed with a call identifier for the call or having a field in the speech record including the call identifier. The call identifier is a unique number which identifies the call.

In some embodiments, the PktArt component 616 also generates a communications media fingerprint from a portion (or from all) of the audio for the call and stores the communications media fingerprint for the call in the speech recording record. The portion of the audio of the call is the first 60 seconds in some embodiments. In some embodiments, the communications media fingerprint is generated for the same portion of the audio of the call as used for generating the communications media fingerprint stored in the trace record by the SBC 604.

The TRC/CDR ingestion component 620 of Function Pod 618 receives the trace records and call detail records 608 from SBC 604 via communication path 680 and ingests these records and stores them in data lake 654 as TRC records 660 and CDR records 658 respectively. Each of the TRC records and CDR records is keyed with the caller identifier for the call or includes a field within the record with the call identifier for the call.

The speech-to-text component 624 of the Function Pod 622 obtains speech recording records 656 from database 654 via communications path 686. For each speech record, the speech-to-text component 624 converts the speech of the recorded audio from the call to a text transcript record and stores the text transcript record for the call into the data lake 654 via communications path 690 as part of transcript record 662. The text transcript record for the call is keyed with the call identifier for the call or includes a field within the record with the call identifier for the call.

The embeddings to campaign component 628 obtains text transcript records from the data lake 654 via communications path 692. For each of the text transcripts, the embeddings to campaign component generates an embedding vector which represents the "meaning" of the text of the call as previously described. In various embodiments, the embeddings to campaign component includes a large language model (LLM) embedding-only neural network encoder. The embeddings campaign component then performs a vector search also referred to as a similarity search of the previously stored embedding vectors stored as call vector records 664, these call vector records having been previously processed by the Embedding to Campaign component from text transcripts of calls determined by the Policy and Routing Server 612 and/or the SBC 604 as being robocalls. The data lake 654 in response to a vector search query will provide the N closest matching embedding vector records or entries from the call vector records 664 (e.g., a call identifier for each of the N closest embedding vector matches) and the distance between each of the N embedding vectors and the embedding vector which was inputted as part of the vector search. The distance between the embedding vectors determines how close the vectors are to one another which corresponds to how semantically similar the text corresponding to the two embedding vectors are. In some embodiments, the distance between the identified vectors and the target vector (the inputted vector of the search) is expressed as a similarity score having a value between 0.0 and 1.0, with 1.0 indicating a guaranteed match (e.g., this usually indicates the text corresponding to each of the two embedding vectors is identical). From the N closest embedding vectors which are returned, the matched embedding vector entry or record with the highest similarity score has its similarity score compared to a similarity threshold value, the similarity threshold value determining whether the embedding vector of the call being analyzed is part of the same robocall campaign as the matched embedding vector entry or record with the highest similarity score. If the similarity score is above the similarity threshold value, then the call being analyzed is determined to be part of the same robocall campaign as the matched entry or record with the highest similarity score. If the similarity score is not above the threshold value, then the call is determined to not be part of the same robocall campaign as the matched entry or record with the highest similarity score but is instead considered to be part of a new robocall campaign not seen before or not included among the call embedding vector records 664 stored in the data lake 654. In some embodiments, instead of using the similarity score the distances between the target embedding vector (e.g., embedding vector provided for the search) and the N closest matched embedding vector entries/records returned is used. In such cases, the closest matched entry with the smallest distance is used. This distance is compared to a distance threshold (e.g., a normalized distance threshold) and if the distance is less than the distance threshold value then the call corresponding to the embedding vector under analysis is determined to be part of the robocall campaign of the closest matched entry or record. If the distance is not less than the distance threshold, then the call corresponding to the new embedding vector under analysis is determined to part of robocall campaign for which no entries or records are in the data lake 654. A precision of the similarity score, i.e., the number of decimal places that define the similarity score is used which is sufficient to distinguish between different embedding vectors and can be adjusted as the number of vectors increases. In some embodiments, similarity score precision (e.g., the number of decimal places used for the similarity score or vector distance) is an adjustable setting of the analytics system which may be input via the GUI component 648 of Function Pod 646. In some embodiments, the precision of the similarity score is one decimal place. In some embodiments, the similarity score is two or three decimal places. In some instances, a vector search or similarity search may result in two or more embedding vectors having the same similarity score or vector distance which indicates that these two or more embedding vectors are the closest to the embedding vector under analysis. In such instances, one of the two or more embedding vectors is selected as being the closest embedding vector from among the two or more embedding vectors having the smallest vector distance or highest similarity score. In some embodiments, the selection is done randomly from among the two or more embedding vectors having the highest similarity score/smallest vector distance.

The Embeddings to Campaign component 626 generates a call embedding vector record which includes: the embedding vector generated for the call, the text transcript information or at least the first K words (e.g., K being the first 100 words) from the text transcript for the call, the call identifier for the call, and a campaign identifier for the call. The campaign identifier for the call will be a new unique robocall campaign identifier when the call is determined not to be part of a previously known campaign based on the similarity score or the distance between the closest embedding vector. Otherwise, the campaign identifier from the embedding record or entry with the closest match is used for the campaign identifier as the call has been determined to be part of the same robocall campaign as the closest matched entry or record based on the similarity score or vector distance. The Embeddings to Campaign component 626 then stores the generated embedding vector for the call into the data lake 654 as part of the call embedding vector records 664 via communications path 694.

In some embodiments, the Embeddings to Campaign component 628 uses the caller identifier for the call embedding vector record to obtain the communications media fingerprint for the call from the speech record keyed to or having the field containing the same call identifier. Upon obtaining the communications media fingerprint for the call, the Embeddings to Campaign component 628 includes the communications media fingerprint for the call in the call embedding vector record with the same call identifier.

As previously explained, not all calls previously determined to be robocalls by the Policy and Routing Server or the SBC 604 are necessarily "True Positives" for being unwanted robocalls. After a period of time in which a large number of calls have been processed, some of call entries may be single entries indicating misdials. Campaigns with a call count below some threshold value can be pruned or removed at this point. Similarly, call campaigns for school closing or government emergencies such as police and fire evacuation campaign calls or severe weather alert campaign calls may be identified based on calling party number if available and/or based on analysis of the text of the calls for example by human evaluation and those campaign entries removed or purged from the call embedding records 664. The viewer component 632 of Function Pod 630 obtains from the data lake 654 text of calls for the campaign (or the first K words of the text of calls) from the call embedding vector records for campaigns via communications path 696 in response for example to user inputs to the analytics system 602, the user being a human performing an evaluation of a campaign text corresponding to a call of the campaign that had been identified as including the text "school will be closed" to determine whether the calling campaign corresponds to a school closing and that the entries for the campaign should be purged. The purge campaign entries command or other commands (e.g., commands to delete specific call entries) are inputted to the data lake 654 from the viewer component 632 via communications path 698. The data lake 654 implements operations to effectuate the inputted commands.

The Robocall Analysis component 642 of Function Pod 641 performs analysis of the calls of the different campaigns to determine robocall probabilities using campaign information versus just using information from a single call. This includes for example obtaining the call identifiers for each of the calls of a robocall campaign in determining how many calls were detected for the robocall campaign and then obtaining from the CDRs the calling party numbers for each of the robocalls of the campaign and assigning a robocall confidence number to the calling party number based on the number of calls in the campaign. The Robocall Analysis component 642 obtains the call embedding vector records 664 for campaigns via communications path 705 from data lake 654 and generates robocall report records 668 for one or more or all or any combination of the robocall campaigns included in the call embedding vector records 664 and stores the robocall report records 668 in the data lake 654 via communications path 706, each of the robocall report including a robocall campaign identifier, a list of calling party telephone numbers identified with robocalls for the robocall campaign, and a robocall confidence score that calls from the calling party telephone number are robocalls. The robocall confidence score is generated based on the number of calls included in the campaign with higher number of calls in a campaign resulting in a higher robocall confidence score. The robocall confidence score in some embodiments is a probability that a call from the calling party number is a robocall with probability being based in part on the number of calls in the robocall campaign to which the calling party number corresponds. The robocall information in the robocall reports is communicated to the SBC 604 via communications path 718 as part of the robocall detection model and robocall information where it is used by the call processing component 606 to determine which incoming calls are robocalls and to take mitigation actions based on the robocall confidence score (e.g., low confidence - just a notification being sent with call to the target, medium confidence - call sent to screening service or automated attendant service that can screen the call before it reaches the target, high confidence - terminate or drop the call and do not forward it to the target).

The feature extraction component 636 obtains the CDRs 658, TRCs 660 and the corresponding caller identifiers for each of the records from the data lake 654 via communications path 700. The feature extraction component 636 extracts signaling features (e.g., SIP signaling features) from the call detail records or the trace records and creates extracted features records for each of the calls. The CDRs are for all calls including both calls sent to targets and robocalls. The feature extraction component 636 eliminates or filters out from the call detail records 658 and the trace records 660 any calls that were terminated by the SBC 604 as these will include calls including unallocated numbers which were determined to not meet the additional criteria for designation as a robocall or for which the call was terminated because only sampling of robocalls was being performed due to for example processing or storage capacity of the analytics system 620.

The features of each of the calls that may be, and in some embodiments are, useful for further classification are extracted by the feature extraction component 636. This call information includes information for calls for which speech record(s) 220 were generated (e.g., calls with unallocated telephone numbers) as well as calls which were egressed to valid targets (e.g., communications devices with the assigned target telephone numbers). These extracted features include, for example, overall call parameters, such as for example ingress trunk group name, signaling peer Internet Protocol (IP) network, and calling number prefix. The extracted features may, and in some embodiments does, also include aspects of the Session Initiation Protocol (SIP) signaling on the received SIP INVITE when the call is a SIP call. The SIP signaling features on the received SIP INVITE message includes for example which headers are included in the SIP INVITE message, which header parameters are present, the content of the User-Agent header, etc. The feature extraction component 636 generates extracted features records 665 for each of the calls it processes. The extracted feature records includes the extracted features for the call and is keyed with the call identifier for the call (i.e., the call to which the CDR corresponds from which the features were extracted) or includes a field with the call identifier for the call (i.e., the call to which the CDR corresponds from which the features were extracted). The feature extraction component 636 stores the extracted features records 665 in the data lake 654 via communications path 701.

The labeling component 640 obtains the extracted features records from the stored extracted features record 665 via communications path 702 and generates from it a labeled call record. The labeled call record typically includes at least a label field, a robocall campaign identifier field, fields for the extracted features, and a call identifier field. The labeling component 640 retrieves from each of the extracted features record 665, its call identifier. The labeling component 640 then uses the call identifier to search the call embedding vector records 664 to determine if any of these records are keyed to or include the call identifier. When the search results in the identification of a call embedding vector record with the call identifier, the campaign identifier from the call embedding vector record is obtained. The labeling component 640 generates a labeled call record for the call. The labeled call record includes the call identifier, the extracted features for the call, the obtained campaign identifier, and a label "POSITIVE" indicating that this labeled call record is a robocall. The labeled call record in some embodiments includes a label field, a robocall campaign identifier field, fields for the extracted features, and a call identifier field. The "POSITIVE" label is included in the label field in this instance. The robocall campaign identified/obtained from the search is included in the robocall campaign identifier field. The extracted features for the call are included in the extracted features fields. And the call identifier for the call is included in the call identifier field.

When no records with the call identifier are located by the search of the call embeddings vector records 664, the labeling function determines whether trace record exists for the call by searching the trace records 660 to identify if any of these records include or are keyed to the call identifier for the call. When the labeling component 640 determines that a trace record exists for the call based on the search, the labeling component 640 obtains the communications media fingerprint from the trace record. The labeling component 640 performs a fuzzy fingerprint search of the communications media fingerprints included in the call embedding vector records 664 to determine if there is a match. This includes generating a set of fuzzy fingerprints from the communications media fingerprint from the trace record and comparing each of the fuzzy fingerprints and the original fingerprint from the trace record to the communications media fingerprints included in the call embedding vector records 664. If a match is identified, then the campaign identifier from the matching record is used in the labeled call record for the call. The labeling component 640 will generate the labeled call record with the label "POSITIVE" indicating that it is a robocall, and include in the labeled call record, the call identifier, the campaign identifier from the record with the matching fingerprint, and the extracted features for the call. When no call embedding vector record has a matching fingerprint then the labeling component 640 generates a labeled call record for the call with following information: "NEGATIVE" label indicating the call is not a robocall, call identifier for the call, extracted features for the call, and the robocall campaign identifier = NULL. In embodiments in which the labeled call record includes a label field, a robocall campaign identifier field, fields for the extracted features, and a call identifier field, the label field is populated with "NEGATIVE", the robocall campaign identifier field is populated with NULL, the fields for the extracted features are populated with the extracted features for the call, and the call identifier field is populated with the call identifier for the call. While a "POSITIVE" label has been used to indicate the record is for a call determined to be robocall and a "NEGATIVE" label has been used to indicate the record is for a call which has been determined to not be a robocall, these labels are only exemplary and other words or values can be used for the labeling indicating the same meaning.

In embodiments which do not use the fingerprint matching, the operation relating to the fingerprint generation by the PktArt component 616 and operations related to fingerprints performed by the labeling component 640 are not performed. In such cases, when no records with the call identifier are located by the search of the call embeddings vector records 664, the labeling component 640 generates the labeled call record for the call with the "NEGATIVE" label, the campaign identifier set to NULL, the extracted features for the call, and the call identifier.

The labeling component 640 stores the generated labeled call records 666 in the data lake 654 via communications path 704. The set of labeled call records 666 is a robocall/robocall campaign training data set with each of the labeled call records including a label of whether the record is for a robocall or not and the extracted features for the call.

The model generator/trainer component obtains the labeled call records 666 from the data lake 654 via communications path 707 and generates and/or trains robocall detection model(s) using the labeled call records 666 to detect, identify, and/or determine whether a call is a robocall based on signaling features of the call. In some embodiments, the robocall detection model(s) are trained to detect whether a call is a robocall without taking into consideration the calling party telephone number. This is particularly useful when the robocall campaign is being carried out from blocks of calling party numbers which may not have all been identified. This is accomplished in some embodiments by excluding the calling party telephone number from the signaling features used to train the robocall detection model.

In some embodiments the model generator/trainer generates and/or trains one or more model(s) (e.g., classifier model(s) such as neural network classifier models or application(s)) that can identify, detect, and/or determine the likelihood or probability that a received call at a call processing device is a robocall or part of a robocall campaign based on the call's signaling features (e.g., signaling features included in a SIP INVITE message for the call such as for example headers included in the SIP INVITE message, content of the headers, and ordering of the headers).

In some embodiments, a plurality of robocall detection models are generated and trained with at least some embodiments being trained to identify calls which are part of a specific robocall campaign. In such cases, the labeled call records 666 which forms the training dataset is parsed to identify the "POSITIVE" records which have a specific robocall identifier and those records as well as "NEGATIVE" records are used in training a specific robocall campaign detection model for the robocall campaign with the specific robocall identifier. Each of the robocall identifiers is unique.

In various embodiments, the model generator/trainer component 644 uses a balanced set of "POSITIVE" and "NEGATIVE" records to perform the model training. In some embodiments, this includes either oversampling the "POSITIVE" records or under sampling "NEGATIVE" records so that the set of training records is balanced. The model generator/trainer component 644 stores the generated and trained robocall model(s) 667 in the data lake 654 via communications path 708.

As previously discussed, the reports and upload fmwk component 652 of the Function Pod 646 deploys the trained model(s) and robocall information to call processing devices including for example the SBC 604 via communications path 718.

The SBC 604 call processing component 606 uses the robocall detection model or models to determine, identify, and/or detect which of the SIP calls it receives are robocalls and then to take a mitigation action as previously described. In various embodiments, the robocall detection models output a confidence score or probability score indicating the probability or likelihood that a received call is a robocall based on the signaling features of the call (e.g., the signaling features included in a SIP INVITE message for the call). A mitigation operation is then determined and implemented based on the score.

While the system 600 has been described in connection with a single communications processing device which was an SBC, the system can have and typically do have a plurality of communications processing devices (e.g., a cluster of SBCs) which would perform the same operations as discussed in connection with the exemplary communications processing device SBC 604. While the exemplary calls in the system 600 are SIP calls, the invention is applicable to other types of calls; in such cases, the signaling features would be features for the specific calling protocol being utilized. For example, instead of Session Initiation Protocol, the H.323 standard protocol could be used for calls.

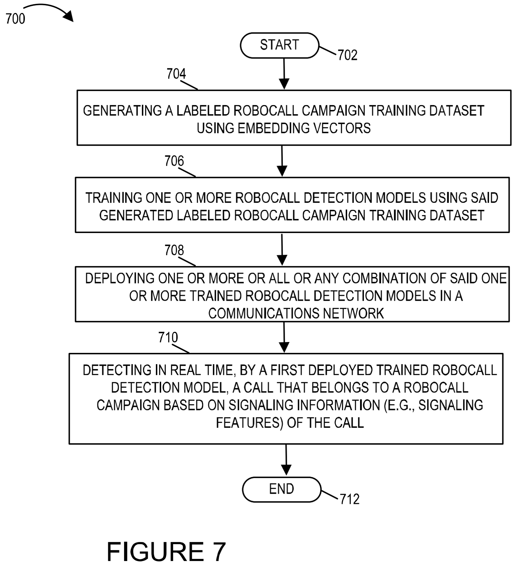

Figure 7 illustrates a flowchart of an exemplary method 700 in accordance with an embodiment of the present invention. The method may be, and in some embodiments is, implemented by the exemplary system 100 or the exemplary system 600 but can be implemented on other systems and using other system architectures.

The method 700 starts in step 702. Operation proceeds from step 702 to step 704. In step 704, a labeled robocall campaign training dataset is generated using embedding vectors for example by analytics system 130 of system 100 or analytics system 602 of system 600. Operation proceeds from step 704 to step 706.

In step 706, one or more robocall detection models is trained using said generated labeled robocall campaign training data set for example by analytics system 130 of system 100 or analytics system 602 of system 600. Operation proceeds from step 706 to step 708.

In step 708, one or more or all or any combination of said one or more training robocall detection models is deployed in a communications network for example by analytics system 130 of system 100 or analytics system 602 of system 600. Operation proceeds from step 708 to step 710.

In step 710, a first deployed trained robocall detection model detects in real time a call that belongs to a robocall campaign based on signaling information (e.g., signaling features) of the call. Step 710 is implemented for example by communications processing device 1 106 of system 100 to which the first trained robocall detection model is deployed to identify, determine and/or detect which incoming calls to the communications processing device 1 106 belong to a robocall campaign based on signaling information (e.g., signaling features) of the incoming calls. In some embodiments, step 710 is implemented for example by SBC 604 to which a first trained robocall detection model is deployed. Operation proceeds from step 710 to the end step 712 where the method ceases. In various embodiments, the method continues using newly acquired data in which case operation would proceed from step 708 back to step 704 and the steps of the method would be repeated in a continuous loop.

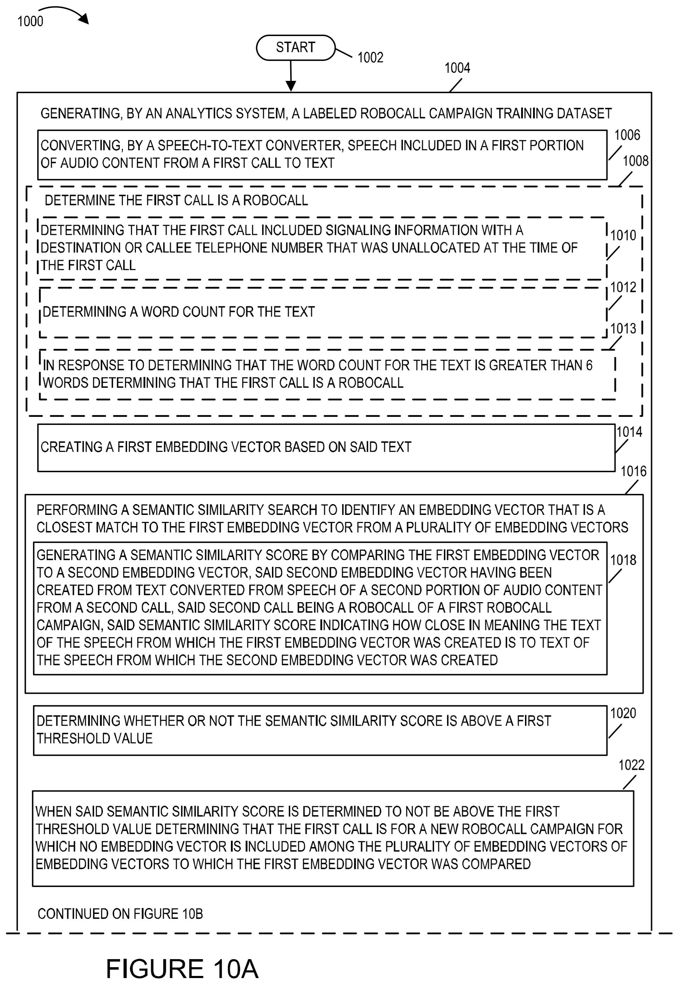

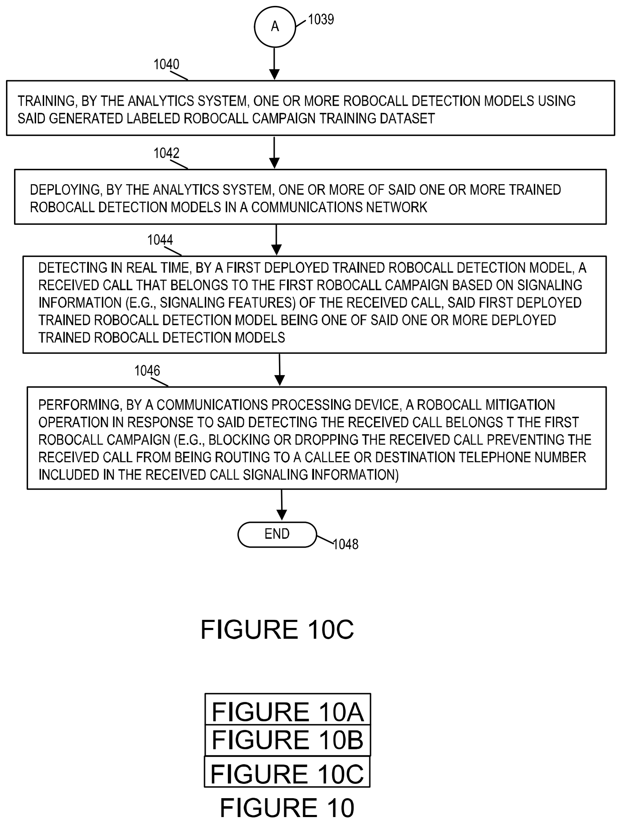

Figure 10 illustrates the combination of Figures 10A, 10B, and 10C. Figure 10A illustrates the first part of a flowchart of a method 1000 in accordance with an embodiment of the present invention. Figure 10B illustrates a second part of a flowchart of a method 1000 in accordance with an embodiment of the present invention. Figure 10C illustrates a third part of a flowchart of a method 1000 in accordance with an embodiment of the present invention.

The method 1000 starts in step 1002 shown on Figure 10A. Operation proceeds from step 1002 to step 1004. In step 1004, an analytics system generates a labeled robocall campaign training dataset. Step 1004 includes sub-steps 1006, 1014, 1016, 1020, 1022, 1024, 1026, 1028, 1030, 1032, 1034, 1036, and 1038.

In sub-step 1006, a speech-to-text converter of the analytics system converts speech included in a first portion of audio content from a first call to text.

In sub-step 1008, the analytics system determines that the first call is a robocall. Determining that the first call is a robocall includes sub-steps 1010, 1012, and 1013. In sub-step 1010, the analytics system determines that the first call included signaling information with a destination or callee telephone number that was unallocated at the time of the first call. The analytics system can utilize information provided from a call detail record for the first call or from information provided to the analytics system to make this determination such as only being provided audio for calls which included signaling information with a destination or callee telephone number that was unallocated at the time, said first call being one of the calls for which audio was provided to the analytics system. In sub-step 1012, the analytics system determines a word count for said text. In sub-step 1013, the analytics system in response to determining the word count for said text is greater than six words, determines that the first call is a robocall.

In sub-step 1014, a first embedding vector is created based on said text.

In sub-step 1016, a semantic similarity search is performed to identify an embedding vector that is a closest match semantically to the first embedding vector from a plurality of embedding vectors, each of the plurality of embedding vectors having been created from text converted from speech of a robocall from a plurality of different robocalls, said semantic similarity search identifying the robocall with the highest semantic similarity score when compared to the first embedding vector.

Sub-step 1016 includes sub-step 1018. In sub-step 1018, a semantic similarity score is generated by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created.

In sub-step 1020, the analytics system determines whether or not the semantic similarity score is above a first threshold value.

In sub-step 1022, when said semantic similarity score is determined to not be above the first threshold value, the analytics system determines that the first call is for a new robocall campaign for which no embedding vector is included among said plurality of embedding vectors to which the first embedding vector was compared.

In sub-step 1024 shown on Figure 10B, the analytics system in response to determining that the first call is for a new robocall campaign: (i) generates a new record, said new record including a unique call identifier for the first call, the first embedding vector, and a unique robocall campaign identifier; and (ii) stores the new record in a database (116 for system 100 or 654 for system 600, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of.

In sub-step 1026, when said semantic similarity score is determined to be above the first threshold value, the analytics system determines that the first call is part of the first robocall campaign.

In sub-step 1028, in response to determining that the first call is part of the first robocall campaign, the analytics system: (i) generates a first record, said first record including a unique call identifier for the first call, the first embedding vector, and a robocall campaign identifier corresponding to the first robocall campaign identifier, said first robocall campaign identifier being obtained from a second record including the second embedding vector and the first robocall campaign identifier; and (ii) stores the first record in a database (116 for system 100 or 654 for system 600), said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to the robocall campaign to which the call corresponding to the call identifier has been determined to be part of, said second record being one of said plurality of records. The first robocall campaign identifier is a unique identifier assigned to and included in records corresponding to calls which have been determined to be part of the first robocall campaign.

In sub-step 1030, the analytics system extracts signaling features from a first call detail record corresponding to the first call, said extracted signaling features including calling telephone number and SIP signaling features when the first call is a SIP call.

These extracted signaling features include one or more or all or any combination of the following: call parameters, ingress trunk group name, signaling peer Internet Protocol (IP) network, calling number prefix, calling party telephone number, SIP signaling features of the received SIP INVITE message when the first call is a SIP call. The SIP signaling features of the received SIP INVITE message including one or more or all or any combination of the following: the headers included in the SIP INVITE message, which header parameters are present, the content of the headers included in the SIP INVITE message, the content of the User-Agent header in the SIP INVITE message.

In sub-step 1032, the analytics system stores the extracted signaling features in the new record when the semantic similarity score is determined to not be above the first threshold value.

In sub-step 1034, the analytics system labels the new record as containing information for a robocall when the semantic similarity score is determined to not be above the first threshold value.

In sub-step 1036, the analytics system stores the extracted signaling features in the first record when the semantic similarity score is determined to be above the first threshold value.

In sub-step 1038, the analytics system labels the first record as containing information for a robocall when the semantic similarity score is determined to be above the first threshold value.

Operation proceeds from step 1004 via connection node A 1039 to step 1040 shown on Figure 10C.

In step 1040, the analytics system trains one or more robocall detection models using said generated labeled robocall campaign training dataset. Operation proceeds from step 1040 to step 1042.

In step 1042, the analytics system deploys one or more of said one or more trained robocall detection models in a communications network. Operation proceeds from step 1042 to step 1044.

In step 1044, a first deployed trained robocall detection model detects in real time a received call belongs to the first robocall campaign based on signaling information (i.e., signaling features) of the of the received call, said first deployed trained robocall detection model being one of said one or more deployed trained robocall detection models. Operation proceeds from step 1044 to step 1046.

In step 1046, a communications processing device performs a robocall mitigation operation in response to said detecting the received call belongs to the first robocall campaign. In at least one such embodiment, the robocall mitigation operation is to block or drop the received call preventing the received call from being routed to a destination or callee telephone number including in the received call signaling information. Operation proceeds from step 1046 to step 1048.

In step 1048, the method 1000 ends.

Numbered method embodiments utilizing the steps and sub-steps of method 1000 will now be discussed.

In a first method embodiment of the invention, all of the steps and sub-steps of method 1000 are implemented.

In a second method embodiment of the invention, step 1004 and its sub-step 1006, sub-step 1014, sub-step 1018, sub-step 1020 as well as step 1040, and step 1042 are implemented but sub-steps 1008, 1010, 1012, 1013, 1016, 1022, 1024, 1026, 1028, 1030, 1032, 1034, 1036, 1038 and steps 1044 and 1046 are not implemented. In this second method embodiment invention, step 1018 is not a sub-step of 1016.

In a third method embodiment of the invention, step 1004 and its sub-step 1006, sub-step 1014, sub-step 1016, sub-step 1018, sub-step 1020 as well as step 1040, and step 1042 are implemented but sub-steps 1008, 1010, 1012, 1013, 1022, 1024, 1026, 1028, 1030, 1032, 1034, 1036, 1038 and steps 1044 and 1046 are not implemented.

In a fourth method embodiment of the invention, step 1004 and its sub-step 1006, sub-step 1014, sub-step 1016, sub-step 1018, sub-step 1020, sub-step 1022, sub-step 1024 as well as step 1040, and step 1042 are implemented but sub-steps 1008, 1010, 1012, 1013, 1026, 1028, 1030, 1032, 1034, 1036, 1038 and steps 1044 and 1046 are not implemented.

In a fifth method embodiment of the invention, step 1004 and its sub-step 1006, sub-step 1014, sub-step 1016, sub-step 1018, sub-step 1020, sub-step 1026, sub-step 1028 as well as step 1040, and step 1042 are implemented but sub-steps 1008, 1010, 1012, 1013, 1022, 1024, 1030, 1032, 1034, 1036, 1038 and steps 1044 and 1046 are not implemented.

In a sixth method embodiment of the invention, each of the plurality of embedding vectors corresponds to a call meeting a first set of criteria, said first set of criteria being indicative of a robocall, said first set of criteria including a first criteria, said first criteria being that signaling for the call includes a destination or callee telephone number that was unallocated at the time of the call; and step 1004 and its sub-step 1006, sub-step 1014, sub-step 1016, sub-step 1018, sub-step 1020, sub-step 1026, sub-step 1028 as well as step 1040, and step 1042 are implemented but sub-steps 1008, 1010, 1012, 1013, 1022, 1024, 1030, 1032, 1034, 1036, 1038 and steps 1044 and 1046 are not implemented.

In a seventh method embodiment of the invention, each of the plurality of embedding vectors corresponds to a call meeting a first set of criteria, said first set of criteria being indicative of a robocall, said first set of criteria including a first criteria, said first criteria being that signaling for the call includes a destination or callee telephone number that was unallocated at the time of the call; and step 1004 and its sub-step 1006, sub-step 1014, sub-step 1016, sub-step 1018, sub-step 1020, sub-step 1026, sub-step 1028, sub-step 1030, sub-step 1036, sub-step 1038 as well as step 1040, and step 1042 are implemented but sub-steps 1008, 1010, 1012, 1013, 1022, 1024, 1032, 1034 and steps 1044 and 1046 are not implemented. The first record includes the extracted signaling features after the analytics system extracts and stores them in the first record. It is further noted that the first robocall campaign identifier is a unique identifier assigned to and included in records corresponding to the calls which have been determined to be part of the first robocall campaign.

In an eighth method embodiment of the invention, each of the plurality of embedding vectors corresponds to a call meeting a first set of criteria, said first set of criteria being indicative of a robocall, said first set of criteria including a first criteria, said first criteria being that signaling for the call includes a destination or callee telephone number that was unallocated at the time of the call; and step 1004 and its sub-step 1006, sub-step 1014, sub-step 1016, sub-step 1018, sub-step 1020, sub-step 1022, sub-step 1024, sub-step 1026, sub-step 1028, sub-step 1030, sub-step 1032, sub-step 1034, sub-step 1036, and sub-step 1038 as well as step 1040, and step 1042 are implemented but sub-steps 1008, 1010, 1012, 1013, and steps 1044 and 1046 are not implemented.

In a ninth method embodiment of the invention, each of the plurality of embedding vectors corresponds to a call meeting a first set of criteria, said first set of criteria being indicative of a robocall, said first set of criteria including a first criteria, said first criteria being that signaling for the call includes a destination or callee telephone number that was unallocated at the time of the call; and step 1004 and its sub-step 1006, sub-step 1014, sub-step 1016, sub-step 1018, sub-step 1020, sub-step 1026, sub-step 1028, sub-step 1030, sub-step 1036, sub-step 1038 as well as step 1040, and step 1042 are implemented but sub-steps 1008, 1010, 1012, 1013, 1022, 1024, 1032, 1034 and steps 1044 and 1046 are not implemented. The first record includes the extracted signaling features after the analytics system extracts and stores them in the first record. It is further noted that the first robocall campaign identifier is a unique identifier assigned to and included in records corresponding to the calls which have been determined to be part of the first robocall campaign. Additionally, the step of generating the labeled robocall campaign training dataset 104 further includes the sub-steps of extracting signaling features from a call detail record corresponding to a third call, said third call having been determined not to be a robocall; generating a record for the third call, said record for the third call including: said extracted signaling features from the call detail record corresponding to the third call; and labeling the record for the third call as containing information for a call which is not a robocall which are performed prior to step 1040.

A tenth method embodiment of the invention is a method according to the eighth or ninth method embodiment, wherein the step of generating a labeled robocall campaign training dataset 104 further includes: extracting signaling features from a call detail record for a fourth call; determining a call identifier for the fourth call from information included in the call detail record for the fourth call; performing a search of a plurality of records using the call identifier for the fourth call as a search key, each record of the plurality of records corresponding to a different call having been determined to be a robocall, each record of the plurality of records including: an embedding vector for the call to which the record corresponds, a communications media fingerprint for the call to which the record corresponds, a robocall campaign identifier for the call to which the record corresponds, and a call identifier for the call to which the record corresponds; and in response to said search failing to identify a record from the plurality of records including the call identifier for the fourth call: obtaining a communications media fingerprint from a trace record for the fourth call; performing a fuzzy fingerprint search of the plurality of records using the communications media fingerprint for the fourth call; and when said fuzzy fingerprint search identifies a record from the plurality of records with a matching communications media fingerprint, (i) generating a record for the fourth call, said record for the fourth call including: said extracted signaling features from the call detail record for the fourth call, and a robocall campaign identifier obtained from the record with the matching communications media fingerprint, the call identifier for the fourth call; and (ii) labeling the record for the fourth call as containing information for a robocall.

An eleventh method embodiment of the invention is a method according to the tenth method embodiment, wherein the step of generating a labeled robocall campaign training dataset 104 further includes: when said fuzzy fingerprint search does not identify a record from the plurality of records with a matching communications media fingerprint, (i) generating a record for the fourth call, said record for the fourth call including: said extracted signaling features from the call detail record for the fourth call, a robocall campaign identifier set to NULL or information indicating that the fourth call does not belong to a robocall campaign, and the call identifier for the fourth call; and (ii) labeling the record for the fourth call as not containing information for a robocall.

A twelfth method embodiment of the invention is a method according to any one of the second through eleventh method embodiments with the sub-steps 1008, 1010, 1012, 1013 also being implemented.

A thirteenth method embodiment of the invention is a method according to any one of the second through twelfth method embodiments with step of 1044 also being implemented.

A fourteenth method embodiment of the invention is a method according to any one of the second through thirteenth method embodiments with step of 1046 also being implemented.

A fifteenth method embodiment of the invention is a method according to any of the one of the first through fourteenth method embodiments, wherein the step of generating a labeled robocall campaign training dataset 104 further includes: prior to or during the process of converting said speech of the first portion of said audio content of the first call to text: (i) identifying and removing portions of the audio content which include sounds which are not indicative of speech, (ii) identifying and removing the portion of the audio content determined to be silence, (iii) identifying and removing portions of the audio content which include an audio signal below the level of human audible sound, (iv) identifying and removing portions of the audio content which include an audio signal above the level of human audible sound, and (v) making a determination that the remaining portion of the first portion of audio content includes speech when it is greater than a first period of time.

A sixteenth method embodiment of the invention is a method according to any one of the first through fifteenth method embodiments, wherein said sub-step of creating a first embedding vector based on said text 1014 includes: utilizing a Large Language Model (LLM) embeddings-only neural network encoder to create the first embedding vector based on said text.

A seventeenth method embodiment of the invention is a method according to any one of the first through sixteenth method embodiments, wherein the one or more robocalls detection models are not based on features included in the media of a call and does not require the examination or use of a call's media to determine whether the call is or is not a robocall.

An eighteenth method embodiment of the invention is a method according to any one of the first through seventeenth method embodiments, wherein at least one of said one or more robocall detection models is a machine learning neural network classifier model that detects whether a received call is a robocall.

A nineteenth method embodiment of the invention is a method according to any of the first through eighteenth method embodiments, wherein the step 104 of generating, by an analytics system, a labeled robocall campaign training dataset utilizes call information from Call Detail Records or Trace Records from which signaling features are extracted by a feature extraction component of the analytics system 130 which extracts features of the first call. These extracted features include one or more or all or any combination of the following: overall call parameters including ingress trunk group name, signaling peer Internet Protocol (IP) network, and calling number prefix and when also aspects of the Session Initiation Protocol (SIP) signaling of the received SIP INVITE when the first call is a SIP call. The SIP signaling features of the received SIP INVITE message includes one or more or all or any combination of the following: which headers are included in the SIP INVITE message, which header parameters are present in each of the headers, the content of each of the headers, and the content of the User-Agent header.

A twentieth method embodiment of the invention is a method according to any one of the first through nineteenth method embodiments, wherein said one or more robocall detection models includes a plurality of different robocall detection models, said plurality of different robocall detection models including a first robocall campaign detection model and a second robocall campaign detection model; wherein said first robocall campaign detection model is trained on a first subset of the labeled robocall campaign training dataset, said first subset of the labeled robocall campaign training dataset including a first set of records including extracted signaling features from a first set of call detail records corresponding to calls that were identified as being part of a first robocall campaign and a second set of records including extracted signaling features from a second set of call detail records corresponding to calls that were identified as not being part of the first robocall campaign; and wherein said second robocall campaign detection model is trained on a second subset of the labeled robocall campaign training dataset, said second subset of the labeled robocall campaign training dataset including a third set of records including extracted signaling features from a third set of call detail records corresponding to calls that were identified as being part of a second robocall campaign and a fourth set of records including extracted signaling features from a fourth set of call detail records corresponding to calls that were identified as not being part of the second robocall campaign.

A twenty first method embodiment of the invention is a method according to any one of the first through twentieth method embodiments, wherein said generating a labeled robocall campaign training dataset further includes: when a portion of the converted text for the first call is in a language other than English translating that portion of the text not in the English language to the English language, and (ii) using a Large Language Model embeddings-only encoder specifically designed for the English language to generate a first embedding vector from the text for the first call.

A twenty second method embodiment of the invention is a method according to any one of the first through twenty first method embodiments, wherein the sub-steps of step 104 which are implemented in the embodiment are repeated for a plurality of portions of audio content from a plurality of different calls to generate the labeled robocall campaign training dataset, said plurality of portions of audio content from a plurality of different calls including the first portion of audio content from the first call.

A twenty third method embodiment of the invention is a method according to any one of the first through twenty second method embodiments, wherein the steps of the method are implemented by components of the system 100 with the analytics system 130 being implemented in accordance with computing system 400 utilizing components from the assembly of components 500; the database being database 116; the robocall detection models being trained through machine learning; and, the communications processing device being the communications processing device 1 106.

A twenty fourth method embodiment of the invention is a method according to any one of the first through twenty second method embodiments, wherein the steps of the method are implemented by components of the system 600 with the analytics system 602 being implemented in accordance with computing system 400; the database being database 654; the robocall detection models being trained through machine learning; and, the communications processing device being the Session Border Controller 604.

A twenty fifth method embodiment of the invention is a method according to any one of the first through twenty second method embodiments, wherein the steps of the method are implemented by components of the system 600 with the analytics system 602 including a processor and memory and being implemented in accordance with computing system 400; the database being database 654; the robocall detection models being trained through machine learning; and, the communications processing device being the Session Border Controller 604.

A twenty sixth method embodiment of the invention is a method according to any one of the first through twenty fifth method embodiments, wherein supervised machine learning is used in training the one or more robocall detection models.

Figure 4 illustrates an exemplary computing entity/node/device/system (e.g., an analytics system, a communications processing device (e.g., Session Border Controller), network equipment, user equipment, recording device, a communications media fingerprinting device, training data set generator, model generator and trainer, a speech-to-text device, policy and routing server, database system (e.g., with vector searching capability), vector embedding device, similarity search device, feature extraction device, model deployment device, and a labeling device), in accordance with an embodiment of the present invention.

For the sake of simplicity, the computing entity/node/device 400 will be referred to as computing device 400 and is explained using an exemplary embodiment where the computing device 400. Exemplary computing device 400 includes an optional display 402, an input device 404, a processor 406, e.g., a CPU, I/O interfaces 408 and 409, which couple the computing device 400 to networks or communications links and/or various other devices, memory 410, and an assembly of hardware components 419, e.g., circuits corresponding to different components and/or modules, and a communications media fingerprinting component 440 coupled together via a bus 425 over which the various elements may interchange data and information. In some embodiments, the communications media fingerprinting component is implemented as a software component or module or a hardware component or a combination of software and hardware components. Memory 410 includes an assembly of components 418, e.g., an assembly of software components, and data/information 420. The data/information 420 can be organized to include a first database and second database. The first database can be a vector database such as described in connection with vector database 214. The assembly of software components 418 includes a control routines component 422 which includes software instructions which when processed and executed by processor 406 control the operation of the computing device 400 to perform various functions and/or one or more steps of the various method embodiments of the invention. The assembly of components also includes a call detail record (CDR)/trace (TRC) record generator component 424 which generates communications detail records from information corresponding to communications, e.g., SIP calls, passing through, established by and/or monitored by the computing device when the computing device is a communications processing device such as an SBC. The I/O interface 408 includes transmitters 430 and receivers 432. The I/O interface 409 includes transmitters 434 and receivers 436. The I/O interfaces are hardware interfaces including hardware circuitry. In some embodiments, the I/O interfaces include wired and wireless interfaces. The computing device is also configured to have a plurality of Internet Protocol (IP) address/port number pairs, e.g., logical IP address/port pairs, for use in exchanging signaling information. In some embodiments the I/O interfaces include IP address/port pairs. The I/O interfaces in some embodiments are configured to communicate in accordance with the IP, Transport Control Protocol (TCP), User Datagram Protocol (UDP), Session Initiation Protocol (SIP), Session Description Protocol (SDP), Real-time Transport Protocol (RTP), and RTP Control Protocol (RTCP). In some embodiments, the computing device 400 includes a communication component configured to operate using IP, TCP, UDP, SDP and SIP protocol signaling methods. One or more of the I/O interfaces also support public switched telephone network and Integrated Services Digital Network (ISDN) connections and protocols such as for example, T1/E1 connections, BRI connections, ISDN protocol, etc. In some embodiments, the communications component is a hardware component, a software component or a component including hardware and software components. The communications media fingerprinting component is used to generate and analyze media, e.g., digital audio of a voice call, or speech recording records received by the computing device 400. In some embodiments, computing device 400 includes model training a component and/or a classification model component (e.g., neural network trained for identifying and/or detecting robocalls and/or robocall campaigns. In some embodiments, the analytics system 130, the robocaller 1 120, ..., robocaller P 122, UE 1A 124, ..., UE XA 126, communications processing device 1 106, communications processing device 2 108, . . . communications processing device N 110, other devices (e.g., network equipment) 118, policy and routing server(s) 112, recorder 114, database system 116 and 214 are implemented in accordance with the computing device 400. When the analytics system 130 is implemented in accordance with computing device 400 the processor 180 is processor 406 and memory 182 is memory 410. In some embodiments, one or more or all or any combination of the modules or components of the analytics system 130 which implement speech-to-text, vector embedding, similarity searching, feature extraction, communications media fingerprint generation, fuzzy fingerprint matching, record generation and labeling, generation and training of models (e.g., robocall detection classification models), and deployment of generated and trained models are implemented in accordance with the embodiment of computing device 400. In some embodiments, the computing device 400 is implemented as a node of a Kubernetes system. In some embodiments, the computing device 400 is implemented as a Kubernetes system with each of the software and/or hardware components being implemented as a Kubernetes node of the Kubernetes system.

An exemplary assembly of components 500 for a computing entity/node/device/system in accordance with an embodiment of the present invention is illustrated in Figure 5. One or more of the assembly of components may be implemented as hardware components in the assembly of hardware components 419 or as software components in the assembly of software components 418 stored in memory 410 of the exemplary computing device 400.

Figure 5 as discussed above is a drawing illustrating an assembly of components 500 which may be included in an exemplary communications processing device, e.g., computing device 400 of Figure 4. Assembly of components 500 can be, and in some embodiments is, used in computing device 400. The components in the assembly of components 500 can, and in some embodiments are, implemented fully in hardware within the processor 406, e.g., as individual circuits. The components in the assembly of components 500 can, and in some embodiments are, implemented fully in hardware within the assembly of components 419, e.g., as individual circuits corresponding to the different components. In other embodiments some of the components are implemented, e.g., as circuits, within the processor 406 with other components being implemented, e.g., as circuits within assembly of components 419, external to and coupled to the processor 406. As should be appreciated the level of integration of components on the processor and/or with some components being external to the processor may be one of design choice. Alternatively, rather than being implemented as circuits, all or some of the components may be implemented in software and stored in the memory 410 of the computing device 400, with the components controlling operation of computing device 400 to implement the functions corresponding to the components when the components are executed by a processor, e.g., processor 406. In some such embodiments, the assembly of components 500 is included in the memory 410 as assembly of components 418. In still other embodiments, various components in assembly of components 500 are implemented as a combination of hardware and software, e.g., with another circuit external to the processor providing input to the processor 406 which then under software control operates to perform a portion of a component's function. While shown in the Figure 4 embodiment as a single processor, e.g., computer, it should be appreciated that the processor 406 may be implemented as one or more processors, e.g., computers.

When implemented in software the components include code, which when executed by the processor 406, configure the processor 406 to implement the function corresponding to the component. In embodiments where the assembly of components 500 is stored in the memory 410, the memory 410 is a computer program product comprising a computer readable medium comprising code, e.g., individual code for each component, for causing at least one computer, e.g., processor 406, to implement the functions to which the components correspond.

Completely hardware based or completely software based components may be used. However, it should be appreciated that any combination of software and hardware, e.g., circuit implemented components may be used to implement the functions. As should be appreciated, the components illustrated in Figure 5 control and/or configure the computing device 400 or elements therein such as the processor 406 to perform the functions or operations of corresponding steps illustrated and/or described in the methods described herein including in on one or more of the methods 200, 300 700, 1000 and/or described with respect to any of the Figures or pipeline processes described herein. Thus, the assembly of components 500 includes various components that perform functions of corresponding steps of Figures 2, 3, 7, and 10.

Assembly of components 500 includes the following components: a control routines component 502, a communications component 504, a call processing component 506, a determinator component 508, a record generator component 510, a communications media fingerprinting component 512, a comparator component 514, a storage component 516, an analytics component 518, a speech-to-text component 520, a vector embedding component 522 which includes a embeddings-only Large Language Model sub-component 524, a similarity search component 526, a feature extraction component 528, a labeling component 530, a model generator/trainer component 532, a model deployment component 534, a robocall/robocall campaign detection component 536, a speech recording component 538, a PktArt component 540, a TRC/CDR ingestion component 542, embeddings to campaign component 544, a viewer component 546, a robocall analysis component 548, a Graphic User Interface Component 550, a Policy and Routing component 552, reports upload component 554, and a calling sampling component 556.

The control routines component 502 is configured to control the operation of the computing entity/node/device/system. The communications component 504 is configured to provide communications functionality including communications signaling and support for various communications protocols and interfaces. The call processing component 506 is configured to provide processing for incoming calls, including dropping identified robocalls or taking other call handling actions or mitigation actions with respect to identified robocalls. The determinator component 508 is configured to make determinations for the communications processing device, e.g., if a fingerprint being analyzed matches a stored robocall fingerprint, the distance between embedding vectors, whether a call is a robocall, whether a target or callee or destination telephone number is unallocated, whether a record has a matching call identifier, whether a similarity score is above a threshold value, whether a vector distance is below a threshold value, whether a record should be labeled as containing robocall information or as not containing robocall information, determining robocall confidence scores for calls based on signaling features, and determining target telephone numbers .

The record generator component is configured to generate records, e.g., call detail records, trace records, speech recording records, text transcript records, call vector records, robocall lists, robocall report records, labeled call records, training data set records.

The communications media fingerprinting component 512 is configured to generate and process media (e.g., audio) fingerprints including generating fingerprints, generating fuzzy fingerprints, matching of fingerprints (including fuzzy fingerprint matching), generation of fingerprint locales.

The comparator component 514 performs comparisons for example of data such as communications media fingerprints, embedding vectors, call identifiers, signaling features, telephone numbers, and/or communications data, e.g., signaling data from records.

The storage component 516 performs storage and retrieval of information and data to and from memory, storage devices, databases, such as for example communications media fingerprints, call detail records, trace records, training data sets, labelled records, embedding vectors, similarity searches, vector searches, speech recording records, text transcript records, embedding vectors records, robocall report records, robocall models, classification models, robocall lists (e.g., of robocall calling party numbers).

The analytics component 518 performs the operations, steps and functions described herein in connection with analytics system 131 and analytics system 602.

The speech-to-text component 520 converts recording audio of speech to text, generates text transcript records keyed by call identifiers, stores the generated text transcripts, and performs the operations, steps and functions described herein in connection with the speech-to-text component of the analytics system 130.

The vector embedding component 522 generates embedding vectors from the text of text transcript records and performs the operations, steps and functions described herein in connection with vector embedding and the vector embedding component of the analytics system 130. The vector embedding component 522 in some embodiments includes an embeddings-only LLM sub-component 524 which performs the operations, steps, and functions described herein in connection with the large language model 212 of method 200.

The similarity search component 526 performs semantic similarity and vector searches and performs the operations, steps, and functions described herein in connection with the analytics system 130 with respect to similarity searching, vector searching and the similarity search component of the analytics system 130.

The feature extraction component 528 extracts features (e.g., signaling features of calls such as features present in SIP INVITE messages and SDP offer messages from call detail records and trace records and generates records including the extracted features and a call identifier for the call to which the extract features correspond. The feature extraction component 528 also performs the operations, steps, and functions described herein in connection with the analytics system 130 with respect to feature extraction and the feature extraction component of the analytics system 130 and feature extraction component 636 of analytics system 602.

The labeling component 530 generates labeled records including records with features + labels for a call, labeled training data sets, and also performs the operations, steps, and functions described herein in connection with the analytics system 130 with respect to labeling including labeling by call identifier and labeling by fingerprinting and labeling component 640 of analytics system 602.

The model generator/trainer component 532 generates and trains robocall detection models, robocall campaign detection models, classification models, neural network classifier models and also performs the operations, steps, and functions described herein in connection with the analytics system 130 with respect to generating and training models and the generation and training component of the analytics system 130 and model generator/trainer component 644 of system 602.

The model deployment component 534 deploys robocall models to networks and communications processing devices for implementation and also performs the operations, steps, and functions described herein in connection with the analytics system 130 with respect to deploying models and model deployment component of the analytics system 130 discussed in connection with 211 of methods 200 and 300 and the operation performed by the analytics system 602 with respect to the deployment of models.

The robocall/robocall campaign detection component 536 determines, identifies and detects whether a call is a robocall and in some embodiments provides a robocall confidence score or probability score that the call is a robocall or belongs to a robocall campaign. The robocall/robocall campaign detection component 536 is sometimes a component of a trained model or a call processing device or a sub-component of the call processing component 506.

The speech recording component 538 records speech from a call and generates speech recording records which include a call identifier for the call from which the speech was recorded. The speech recording component 538 also performs the operations discussed herein in connection with speech recordings and operations, functions and steps performed by recording devices and recorder 114.

The PktArt component 540 generates speech recording keyed with the caller identifier for the call from which the speech was recorded and also performs the operations, steps, and functions described herein in connection with the PktArt component 616 of analytics system 602.

The TRC/CDR ingestion component 542 performs the operations, steps, and functions described herein in connection with the TRC/CDR ingestion component 620 of analytics system 602.

The embeddings to campaign component 544 performs the operations, steps, and functions described herein in connection with the Embeddings to campaign component 628 of analytics system 602.

The viewer component 546 performs the operations, steps, and functions described herein in connection with the viewer component 632 of analytics system 602.

The robocall analysis component 548 performs the operations, steps, and functions described herein in connection with the robocall analysis component 642 of analytics system 602.

The Graphic User Interface Component 550 performs the operations, steps, and functions described herein in connection with the GUI component 648 of analytics system 602.

The Policy and Routing component 552 receives routing requests, determines whether the target of a routing request is unallocated telephone number, determines whether there are valid routing paths to a target of a routing request, generates and communicates routing responses with a list of valid routing paths to valid targets (targets with allocated telephone numbers), generates and communicates routing responses with a routing path to a recorder device or a analytics system or a PktArt component of analytics system, generates and communicates routing responses indicating that the target is an unallocated telephone number and that there is no valid path to the target, performs sampling operations, makes determinations as to whether criteria are met for a call with a target unallocated number to be routed to a recording device, and also performs the operations, steps, and functions described herein in connection with the policy and routing server 612 and policy and routing server 112.

The reports upload component 554 performs the operations, steps, and functions described herein in connection with the reports upload fmwk component 652 of analytics system 602.

The calling sampling component 556 performs operations related to sampling described herein including determining when calls are to be sampled for robocall analysis and determining when calls are to be sampled for generating trace reports, performing under sampling operations and oversampling operations to balance labeled record training data sets during training of models and performs the operations, steps, and functions described herein in connection with the call sampling component 605 of SBC 604.

As explained above, various devices may be implemented in accordance with computing device 400 such as for example, communications processing device 1 106, recorder 114, analytics system 130, analytics system 602, SBC 604, databases 116 and 214, policy and routing server 112, as such the specific components in the assembly of components 500 included and/or utilized by a device will vary with some devices including some of the above described components which are not included with other devices.

While the invention has been explained in terms of a communication which is a telephone call and the communications media being the audio of the call, the invention is not so limited but is applicable to other types of communications which include an audio media component such as a video calls. Furthermore, while the example generates training data for robocall detection models using embedding vectors, the invention is applicable to other types of communications other than robocalls which have common characteristics and for which a infrastructure or capture system such as described herein can capture communications having a high probability of the being of the same type that can be used to generate automatically labeled data of the type to which the shared characteristics correspond.

Figures 8 and 9 relate to communications media fingerprints.

In various embodiments, a communication media fingerprint for a a call is comprised of a set of a plurality of media segment fingerprints with each media fingerprint segment of the set corresponding to a different segment of the call media, e.g., audio, corresponding to the call. The segments may be, and sometimes are, overlapping communications media segments. In various embodiments, the communications media for example the audio of a call is received in a digitized encoded format. A portion of the communication's media, e.g., the first 30 seconds of a call, is segmented into a plurality of overlapping segments. To generate a media fingerprint segment, the digitized and encoded speech is decoded and converted to an 8 KHz digital speech signal. Within this segment sub-segments which are silence of a particular duration are removed. A discrete Fourier transform is performed on speech signal of the segment. The peak frequencies or dominant frequencies by power spectral density are determined and the locations of the peak frequencies or dominant frequencies are determined as time offset values. A media fingerprint segment is then represented as time offset from beginning of audio, e.g., the beginning of the first 40 seconds, to the first peak frequency of the segment, a second peak frequency, and the time difference between the first peak frequency and the second peak frequency. In this case two dominant peak frequencies in each segment are used. Each segment may be 10 seconds of speech. There is a 50% overlap of segments. There are 4 segment media fingerprint which makes up the communications media fingerprint for the call which is 40 seconds. The segment size of 10 seconds was only chosen for exemplary purposes to simplify the explanation; the segment size is variable but is typically much smaller. A fingerprint locale in some embodiments is generated by varying one or more of the peak frequencies in a segment fingerprint, for example by +/- 1 Hz. For example, an original media segment fingerprint of time offset, frequency 1, frequency 2, delta time between frequency 1 and frequency2 becomes fuzzy segment fingerprint time offset, frequency1 + 1Hz, frequency 2, delta time between frequency 1 and frequency 2 where the variation is of the first frequency by + 1Hz. Diagram 800 of Figure 8 illustrates segmenting of digital audio with a 50% overlap. Diagram 900 of Figure 9 illustrates the format of an exemplary media fingerprint for a segment of audio of a communication wherein the time offset is stored in two bytes of data, the first and second frequencies are each stored as a single byte of data, and the delta offset is stored as a single byte of data. In some embodiments, two communications media fingerprints are determined to be a match when a first threshold number of segment fingerprints making up the communications media fingerprints match, e.g., 70 % of the segment fingerprints of two different communications media fingerprints match.

Various exemplary numbered embodiments illustrating different features of the present invention will now be discussed. The various features discussed may be used in a variety of different combinations. It should be appreciated that not necessarily all embodiments include the same features and some of the features described below are not necessary but can be desirable in some embodiments. The numbered embodiments are only exemplary and are not meant to be limiting to the scope of the invention. The various method embodiments may be, and in some embodiments are, implemented on system 100 of Figure 1 or system 600 of Figure 6.

### List of Exemplary Numbered Method Embodiments:

Method Embodiment 1. A method comprising: generating a labeled robocall campaign training dataset; training one or more robocall detection models using said generated labeled robocall campaign training dataset; and deploying one or more or all or any combination of said one or more trained robocall detection models in a communications network.

Method Embodiment 1A. The method of Method Embodiment 1, wherein at least one of said one or more robocall detection models is a machine learning neural network classifier model that detects whether a received call is a robocall.

Method Embodiment 1AA The method of Method Embodiment 1, wherein the one or more robocall detection models is not based on features included in the media included in a call and does not require the examination or use of a call's media to determine whether the call is or is not a robocall.

Method Embodiment 1AAA. The method of Method Embodiment 1, wherein said one or more robocall detection models includes a plurality of different robocall detection models, said plurality of different robocall detection models including a first robocall campaign detection model and a second robocall campaign detection model; wherein said first robocall campaign detection model is trained on a first subset of the labeled robocall campaign training dataset, said first subset of the labeled robocall campaign training dataset including a first set of records including extracted signaling features from a first set of call detail records corresponding to calls that were identified as being part of a first robocall campaign and a second set of records including extracted signaling features from a second set of call detail records corresponding to calls that were identified as not being part of the first robocall campaign; and wherein said second robocall campaign detection model is trained on a second subset of the labeled robocall campaign training dataset, said second subset of the labeled robocall campaign training dataset including a third set of records including extracted signaling features from a third set of call detail records corresponding to calls that were identified as being part of a second robocall campaign and a fourth set of records including extracted signaling features from a fourth set of call detail records corresponding to calls that were identified as not being part of the second robocall campaign.

Method Embodiment 1B. The method of Method Embodiment 1AAA, wherein training the first robocall campaign detection model includes training the first robocall campaign detection model to detect whether or not a first call is part of the first robocall campaign based on signaling features of the call, said signaling features of the call not including a calling party telephone number.

Method Embodiment 1BB. The method of Method Embodiment 1B, wherein training the second robocall campaign detection model includes training the second robocall campaign detection model to detect whether or not a second call is part of the second robocall campaign based on signaling features of the call, said signaling features of the call not including a calling party telephone number.

Method Embodiment 1BBB. The method of Method Embodiment 1BB, wherein said first call and said second call are the same call.

Method Embodiment 1C. The method of Method Embodiment 1A, wherein said training a robocall campaign detection model using said generated labeled robocall campaign training dataset includes: performing supervised learning using the labeled robocall campaign training dataset.

Method Embodiment 1D. The method of Method Embodiment 1B, wherein the first call is a Session Initiation Protocol (SIP) call; and wherein the signaling features of the first call used to detect whether or not the first call is a robocall are included in a SIP INVITE request message.

Method Embodiment 2. The method of Method Embodiment 1, wherein said generating a labeled robocall campaign training dataset includes: converting, by a speech-to-text converter, speech included in a first portion of audio content from a first call to text.

Method Embodiment 3. The method of Method Embodiment 2, wherein said generating a labeled robocall campaign training dataset further includes: creating, by a first neural network encoder, a first embedding vector based on said text; generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created; and determining whether or not the semantic similarity score (e.g., a numerical value from 0 to 1) is above a first threshold value (e.g., 0.8).

Method Embodiment 4. The method of claim 3, wherein the first neural network encoder is a Large Language Model (LLM) embeddings-only neural network encoder.

Method Embodiment 4A. The method of Method Embodiment 3, wherein the first neural network encoder does not include a decoder portion.

Method Embodiment 5. The method of Method Embodiment 3, wherein said generating a labeled robocall campaign training dataset further includes: when said semantic similarity score is determined to be above the first threshold value, determining that the first call is part of the first robocall campaign.

Method Embodiment 6. The method of claim 3, wherein said generating a labeled robocall campaign training dataset further includes: when said semantic similarity score is determined to not be above the first threshold value, determining that the first call is not part of the first robocall campaign.

Method Embodiment 7. The method of claim 3, wherein said generating the semantic similarity score by comparing the first embedding vector to the second embedding vector is part of performing a semantic similarity search to identify an embedding vector that is a closest match semantically to the first embedding vector from a plurality of embedding vectors, each of the plurality of embedding vectors having been created from text converted from speech of a robocall from a plurality of different robocalls, said semantic similarity search identifying the robocall with the highest semantic similarity score when compared to the first embedding vector.

Method Embodiment 7A. The method of claim 3, wherein said generating the semantic similarity score by comparing the first embedding vector to the second embedding vector is part of performing a vector search to identify an embedding vector that is the closest distance to the first embedding vector from a plurality of embedding vectors, each of the plurality of embedding vectors having been created from text converted from speech of a different robocall, said vector search identifying the robocall with the smallest distance when compared to the first embedding vector, said semantic similarity score being based on the distance between the first embedding vector and the embedding vector from the plurality of embedding vectors that is the closest in distance to the first embedding vector. (In this case the score has an inverse relationship to the distance - the smaller the distance the higher the score. In some other embodiments the score could have a direct relationship to the distance in which case the smaller the distance between vectors the smaller the score; in such cases a score below a threshold value is used to determine if the first embedding vector is part of the campaign of the closest identified embedding vector of the plurality of embedding vectors).

Method Embodiment 8. The method of Method Embodiment 7, wherein said generating a labeled robocall campaign training dataset further includes: when said semantic similarity score is determined to not be above the first threshold value determining that the first call is for a new robocall campaign for which no embedding vector is included among said plurality of embedding vectors to which the first embedding vector was compared; and in response to determining that the first call is for a new robocall campaign: (i) generating a first record, said first record including a unique call identifier for the first call, the first embedding vector, and a unique robocall campaign identifier; and (ii) storing the first record in a database, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of.

Method Embodiment 9. The method of Method Embodiment 8, wherein said generating a labeled robocall campaign training dataset further includes: when said semantic similarity score is determined to be above the first threshold value, determining that the first call is part of the first robocall campaign; and in response to determining that the first call is part of the first robocall campaign: (i) generating a first record, said first record including a unique call identifier for the first call, the first embedding vector, and a robocall campaign identifier corresponding to the first robocall campaign identifier, said first robocall campaign identifier being obtained from a second record including the second embedding vector and the first robocall campaign identifier; and (ii) storing the first record in a database, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of, said second record being one of said plurality of records.

Method Embodiment 9A. The method of claim 9, wherein the first record further includes a first number K of words of the converted text of the first portion of the audio content of the speech of the first call, K being a positive integer greater than 1 (e.g., K = 100); and wherein each of the plurality of records also includes a first number K of words of the converted text of the first portion of the audio content of the speech of the call to which the record corresponds.

Method Embodiment 10. The method of Method Embodiment 7, wherein each of the plurality of embedding vectors corresponds to a call meeting a first set of criteria, said first set of criteria being indicative of a robocall, said first set of criteria including a first criteria, said first criteria being that signaling for the call including a destination or callee (e.g., target) telephone number that was unallocated at the time of the call.

Method Embodiment 10A. The method of Method Embodiment 10, wherein the first set of criteria includes a second criteria, said second criteria being that the destination or callee telephone number had been unallocated for a first period of time (e.g., 2 years).

Method Embodiment 10B. The method of Method Embodiment 10A, wherein the first set of criteria includes a third criteria, said third criteria being that calling party telephone number was not a telephone number for a government agency (e.g., school department, police department, fire department, health department, government emergency services agency, weather service agencies) or on a white list of calling party telephone numbers (e.g., numbers for legitimate calling campaigns such as for example political calling campaigns, weather alerts, school closing calling campaigns).

Method Embodiment 11. The method of Method Embodiment 2, wherein the first portion of audio content from the first call includes a first amount of speech.

Method Embodiment 11A. The method of Method Embodiment 11, wherein the first portion of audio content from the first call is for a first period of time (e.g., 60 seconds, 1 minute, 2 minutes, etc.)

Method Embodiment 11B. The method of Method Embodiment 11A, wherein the first period of time is the full length of time of the call after a message ("this call is being recorded") has been played by a recording device which answered the call.

Method Embodiment 11C. The method of Method Embodiment 11, wherein the first amount of speech is speech from a calling party.

Method Embodiment 12. The method of Method Embodiment 11, wherein the first amount of speech is an amount less than N words of speech, N being a positive integer (e.g., N = 100).

Method Embodiment 13. The method of Method Embodiment 12, wherein the first amount of speech is an amount greater than M words of speech, M being a positive integer less than N (e.g., M = 6). (This allows for the pruning or removal of calls that do not have a significant amount of speech for determining whether the call is a robocall and for calls that are likely misdials and have been hung up on relatively quickly after just a few words such as "hello" have been spoken.)

Method Embodiment 13A. The method of Method Embodiment 2, wherein the first portion of audio content from the first call is the entire audio content from the first call.

Method Embodiment 13B. The method of Method Embodiment 2, wherein said generating a labeled robocall campaign training dataset further includes: prior to converting said speech of the first portion of said audio content of the first call to text removing noise from the first portion of audio content; and after removing the noise from the first portion of audio content, filtering the audio content to identify the portions of the audio content which are speech.

Method Embodiment 13B1. The method of Method Embodiment 13, wherein said generating a labeled robocall campaign training dataset further includes: prior to or during the process of converting said speech of the first portion of said audio content of the first call to text: (i) identifying and removing portions of the audio content which include sounds which are not indicative of speech (e.g., single frequency tones, Dual-Tone-Multi-Frequency tones; call progress tones (e.g., ringing tone, busy tone, hang up fast tone), (ii) identifying and removing the portion of the audio content determined to be silence, (iii) identifying and removing portions of the audio content which include an audio signal below the level of human audible sound, (iv) identifying and removing portions of the audio content which include an audio signal above the level of human audible sound, and (v) making a determination that the remaining portion of the first portion of audio content includes speech when it is greater than a first period of time (e.g., 5 seconds - anything less than 5 seconds will be determined not to be speech and will be ignored as it is insufficient to make a robocall determination and this will avoid capturing people saying "hello" and then hanging up followed by busy tone); when the determination is that the remaining portion of the first portion of audio content includes speech further determining a language or languages (e.g., a message played in one language (e.g., English) and then repeated in a second language (e.g., Spanish)) in which the speech is spoken.

Method Embodiment 13C. The method of claim 2, wherein said converting, by a speech-to-text converter, speech included in a first portion of audio content from a first call to text includes: determining that the audio content includes speech; and when the determination is that the first portion of the audio content includes speech further determining a language or languages (e.g., a message played in one language (e.g., English) and then repeated in a second language (e.g., Spanish)) in which the speech is spoken.

Method Embodiment 13D. The method of claim 13C, wherein said generating a labeled robocall campaign training dataset further includes: when the speech is in multiple languages determining portions of the first portion of the audio content of the first call in which each language is spoken; and utilizing a language specific speech-to-text converter for each of the determined portions of the first portion of the audio content whose language matches the identified portion of the first portion of the audio content being converted to text.

Method Embodiment 13F. The method of claim 13D, wherein said generating a labeled robocall campaign training dataset further includes: when the converted text for the first call is in multiple languages, (i) determining the language with the most words in the converted text to be a base language, and (ii) translating any of the text not in the base language to the base language, and (iii) using a Large Language Model embeddings-only encoder specifically designed for the base language (e.g., English) to generate a first embedding vector from the text for the first call.

Method Embodiment 13G. The method of claim 13D, wherein said generating a labeled robocall campaign training dataset further includes: when a portion of the converted text for the first call is in a language other than English translating that portion of the text not in the English language to the English language, and (ii) using a Large Language Model embeddings-only encoder specifically designed for the English language to generate a first embedding vector from the text for the first call.

Method Embodiment 14. The method of claim 5, wherein generating a labeled robocall campaign training dataset further includes: extracting signaling features from a first call detail record corresponding to the first call; generating a first record for the first call, said first record including: said extracted signaling features, a first robocall campaign identifier, said first robocall campaign identifier being a unique identifier assigned to records corresponding to calls which have been determined to be part of the first robocall campaign; and labeling the first record as containing information for a robocall (e.g., labeling the record "POSITIVE").

Method Embodiment 14A. The method of Method Embodiment 14, wherein said labeling the first record as containing information for a robocall includes storing information in the record that indicates the record corresponds to a robocall (e.g., populating a label field of the record with the word "POSITIVE").

Method Embodiment 14B. The method of Method Embodiment 14, wherein said first record further includes a first call identifier for the first call, said first call being a Session Initiation Protocol call, said first call identifier being a SIP call-id for the first call or a generated identifier based on the SIP call-id for the first call.

Method Embodiment 14C. The method of Method Embodiment 14, wherein the first record further includes a first call identifier for the first call, the first call identifier including a destination calling number for the first call, a numerical date (e.g., day, month and year) on which the first call occurred, and a timestamp corresponding to the first call.

Method Embodiment 14D. The method of Method Embodiment 14, wherein the first record further includes a first call identifier, said first call identifier being a unique identifier which identifies the first call from other calls and which identifies the first record from other labeled robocall campaign training dataset records corresponding to other calls.

Method Embodiment 15. The method of claim 14, wherein said generating a labeled robocall campaign training dataset further includes: extracting signaling features from a call detail record corresponding to a third call, said third call not having been determined to be a robocall (e.g., the callee or target telephone number is not an unallocated telephone number); generating a record for the third call, said record for the third call including: said extracted signaling features from the call detail record corresponding to the third call; and labeling the record for the third call as containing information for a call which is not a robocall (e.g., labeling the record "NEGATIVE").

Method Embodiment 15A. The method of Method Embodiment 15, wherein the third record further includes: a robocall campaign identifier set to NULL or information indicating that the third call does not belong to a robocall campaign; and a call identifier for the third call (e.g., SIP call_id for the third call when the third call is a SIP call).

Method Embodiment 16. The method of Method Embodiment 15, wherein generating a labeled robocall campaign training dataset further includes: extracting signaling features from a call detail record for a fourth call; determining a call identifier for the fourth call from information included in the call detail record for the fourth call (e.g., SIP call_id); performing a search of a plurality of records using the call identifier for the fourth call as a search key, each record of the plurality of records corresponding to a different call having been determined to be a robocall, each record of the plurality of records including: an embedding vector for the call to which the record corresponds, a communications media fingerprint for the call to which the record corresponds, a robocall campaign identifier for the call to which the record corresponds, and a call identifier for the call to which the record corresponds; and in response to said search failing to identify a record from the plurality of records including the call identifier for the fourth call: obtaining a communications media fingerprint from a trace record for the fourth call; performing a fuzzy fingerprint search of the plurality of records using the communications media fingerprint for the fourth call; and when said fuzzy fingerprint search identifies a record from the plurality of records with a matching communications media fingerprint, (i) generating a record for the fourth call, said record for the fourth call including: said extracted signaling features from the call detail record for the fourth call, and a robocall campaign identifier obtained from the record with the matching communications media fingerprint, the call identifier for the fourth call; and (ii) labeling the record for the fourth call as containing information for a robocall (e.g., labeling the record "POSITIVE").

Method Embodiment 17. The method of claim 16, wherein generating a labeled robocall campaign training dataset further includes: when said fuzzy fingerprint search does not identify a record from the plurality of records with a matching communications media fingerprint, (i) generating a record for the fourth call, said record for the fourth call including: said extracted signaling features from the call detail record for the fourth call, a robocall campaign identifier set to NULL or information indicating that the fourth call does not belong to a robocall campaign, and the call identifier for the fourth call (e.g., SIP call_id for the fourth call when the fourth call is a SIP call); and (ii) labeling the record for the fourth call as not containing information for a robocall (e.g., labeling the record "NEGATIVE").

Method Embodiment 18. The method of Method Embodiment 1, wherein one or more of the one or more robocall detection models is a classification model generated from or trained using non-media features (e.g., signaling related features such as source address, source identifier, calling party name, calling party number, calling party country of origin, time of day, SIP user agent content, ingress trunk group) included in labeled records of the labeled robocall campaign training data set.

Method Embodiment 19. The method of Method Embodiment 1, wherein training the one or more robocall detection models using said generated labeled robocall campaign training dataset includes performing operations to balance the labeled records from the robocall campaign dataset used to train the one or more robocall detection models (e.g., when the robocall campaign dataset includes more records labeled as not containing information for a call determined to be a robocall than records labeled as containing information for a call determined to be a robocall, performing an oversampling operation of the labeled records labeled as containing information for a call determined to be a robocall to balance the records used for training or performing an under sampling of the labeled records labeled as not containing information for a call determined to be a robocall to balance the records used for training).

Method Embodiment 20. The method of Method Embodiment 1, further comprising: receiving signaling information for a call, by a first deployed trained robocall detection model, said first deployed trained robocall detection model being one of said deployed one or more trained robocall detection models; and determining in real time, by the first deployed trained robocall detection model, that the received call is part of a first robocall campaign based on the received signaling information (e.g., calling party telephone number and typically at least one or a plurality of additional signaling features (e.g., content in a SIP User-agent header) for the call matches to a previous call determined to be part of a first robocall campaign); and determining, by the first deployed trained robocall detection model, a first robocall confidence score for the received call based on information about the first robocall campaign (e.g., the more calls previously detected as being part of the first robocall campaign and/or number of different calling party numbers corresponding to the first robocall campaign, the higher the robocall confidence score indicating the higher the probability that the call is a robocall - the robocall confidence score thus being elevated compared to models in which the calling party number is considered in isolation).

Method Embodiment 21. The method of Method Embodiment 1, wherein the steps of the method are implemented by Pods of a Kubernetes system.

Method Embodiment 22. The method of Method Embodiment 1, wherein one or more steps of the method are implemented by one or more virtual devices in a cloud system.

In the above list of numbered exemplary embodiments exemplary dependencies in the numbered embodiments are included with some numbered embodiments referring to a preceding numbered embodiment and thus depending from the preceding numbered embodiments. While an exemplary dependency is included in each dependent numbered embodiment it is to be understood that any dependent numbered embodiment may, and in some embodiments will, depend from any preceding numbered embodiment in the same list. Accordingly, dependent numbered embodiment should be interpreted as a multiple dependent numbered embodiment preceding from any of the preceding numbered embodiments in the same list with preceding numbered embodiments being required only to the extent the language in the preceding numbered embodiment is required for proper antecedent bases. Thus, intervening numbered embodiments should not be interpreted as necessary unless required for antecedent basis reasons and the dependent numbered embodiment should be interpreted as a multiple dependent embodiment which can depend from any earlier numbered embodiment despite a single preceding numbered embodiment being included as an example.

### List of Exemplary Numbered System Embodiments:

System Embodiment 1. A system comprising: memory; and a first processor, said first processor controlling the system to perform the following operations: generating a labeled robocall campaign training dataset; training one or more robocall detection models using said generated labeled robocall campaign training dataset; and deploying one or more or all or any combination of said one or more trained robocall detection models in a communications network.

System Embodiment 1A. The system of System Embodiment 1, wherein at least one of said one or more robocall detection models is a machine learning neural network classifier model that detects whether a received call is a robocall.

System Embodiment 1AA. The system of System Embodiment 1, wherein the one or more robocall detection models is not based on features included in the media included in a call and does not require the examination or use of a call's media to determine whether the call is or is not a robocall.

System Embodiment 1AAA. The system of claim 1, wherein said one or more robocall detection models includes a plurality of different robocall detection models, said plurality of different robocall detection models including a first robocall campaign detection model and a second robocall campaign detection model; wherein said first robocall campaign detection model is trained on a first subset of the labeled robocall campaign training dataset, said first subset of the labeled robocall campaign training dataset including a first set of records including extracted signaling features from a first set of call detail records corresponding to calls that were identified as being part of a first robocall campaign and a second set of records including extracted signaling features from a second set of call detail records corresponding to calls that were identified as not being part of the first robocall campaign; and wherein said second robocall campaign detection model is trained on a second subset of the labeled robocall campaign training dataset, said second subset of the labeled robocall campaign training dataset including a third set of records including extracted signaling features from a third set of call detail records corresponding to calls that were identified as being part of a second robocall campaign and a fourth set of records including extracted signaling features from a fourth set of call detail records corresponding to calls that were identified as not being part of the second robocall campaign.

System Embodiment 1B. The system of System Embodiment 1AAA, wherein training the first robocall campaign detection model includes training the first robocall campaign detection model to detect whether or not a first call is part of the first robocall campaign based on signaling features of the call, said signaling features of the call not including a calling party telephone number.

System Embodiment 1BB. The system of System Embodiment 1B, wherein training the second robocall campaign detection model includes training the second robocall campaign detection model to detect whether or not a second call is part of the second robocall campaign based on signaling features of the call, said signaling features of the call not including a calling party telephone number.

System Embodiment 1BBB. The system of System Embodiment 1BB, wherein the first call and the second call are the same call.

System Embodiment 1C. The system of System Embodiment 1A, wherein said training a robocall campaign detection model using said generated labeled robocall campaign training dataset includes: performing supervised learning using the labeled robocall campaign training dataset.

System Embodiment 1D. The system of System Embodiment 1B, wherein the first call is a Session Initiation Protocol (SIP) call; and wherein the signaling features of the call used to detect whether or not the first call is a robocall are included in a SIP INVITE request message.

System Embodiment 2. The system of System Embodiment 1, wherein said generating a labeled robocall campaign training dataset includes: converting, by a speech-to-text converter, speech included in a first portion of audio content from a first call to text.

System Embodiment 3. The system of System Embodiment 2, wherein said generating a labeled robocall campaign training dataset further includes: creating, by a first neural network encoder, a first embedding vector based on said text; generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created; and determining whether or not the semantic similarity score (e.g., a numerical value from 0 to 1) is above a first threshold value (e.g., 0.8).

System Embodiment 4. The system of System Embodiment 3, wherein the first neural network encoder is a Large Language Model (LLM) embeddings-only neural network encoder.

System Embodiment 4A. The system of System Embodiment 3, wherein the first neural network encoder does not include a decoder portion.

System Embodiment 5. The system of claim 3, wherein said generating a labeled robocall campaign training dataset further includes: when said semantic similarity score is determined to be above the first threshold value, determining that the first call is part of the first robocall campaign.

System Embodiment 6. The system of System Embodiment 3, wherein said generating a labeled robocall campaign training dataset further includes: when said semantic similarity score is determined to not be above the first threshold value, determining that the first call is not part of the first robocall campaign.

System Embodiment 7. The system of System Embodiment 3, wherein said generating the semantic similarity score by comparing the first embedding vector to the second embedding vector is part of performing a semantic similarity search to identify an embedding vector that is a closest match semantically to the first embedding vector from a plurality of embedding vectors, each of the plurality of embedding vectors having been created from text converted from speech of a robocall from a plurality of different robocalls, said semantic similarity search identifying the robocall with the highest semantic similarity score when compared to the first embedding vector.

System Embodiment 7A. The system of claim 3, wherein said generating the semantic similarity score by comparing the first embedding vector to the second embedding vector is part of performing a vector search to identify an embedding vector that is the closest distance to the first embedding vector from a plurality of embedding vectors, each of the plurality of embedding vectors having been created from text converted from speech of a different robocall, said vector search identifying the robocall with the smallest distance when compared to the first embedding vector, said semantic similarity score being based on the distance between the first embedding vector and the embedding vector from the plurality of embedding vectors that is the closest in distance to the first embedding vector. (In this case the score has an inverse relationship to the distance - the smaller the distance the higher the score. In some other embodiments the score could have a direct relationship to the distance in which case the smaller the distance between vectors the smaller the score; in such cases a score below a threshold value is used to determine if the first embedding vector is part of the campaign of the closest identified embedding vector of the plurality of embedding vectors).

System Embodiment 7B. The system of System Embodiment 3, wherein said generating the semantic similarity score by comparing the first embedding vector to the second embedding vector, is part of performing a semantic similarity search to identify an embedding vector that is a closest match semantically to the first embedding vector from a plurality of embedding vectors, each of the plurality of embedding vectors having been created from text converted from speech of a different robocall, said semantic similarity search identifying the robocall with the highest semantic similarity score when compared to the first embedding vector.

System Embodiment 7C. The system of System Embodiment 3, wherein said generating the semantic similarity score by comparing the first embedding vector to the second embedding vector is part of performing a vector search to identify an embedding vector that is the closest distance to the first embedding vector from a plurality of embedding vectors, each of the plurality of embedding vectors having been created text converted from speech of a different robocall, said vector search identifying the robocall with the smallest distance when compared to the first embedding vector, said semantic similarity score being based on the distance between the first embedding vector and the embedding vector from the plurality of embedding vectors that is the closest in distance to the first embedding vector. (In this case the score has an inverse relationship to the distance - the smaller the distance the higher the score. In some other embodiments the score could have a direct relationship to the distance in which case the smaller the distance between vectors the smaller the score - in such cases a score below a threshold value is used to determine if the first embedding vector is part of the campaign of the closest identified embedding vector of the plurality of embedding vectors).

System Embodiment 8. The system of System Embodiment 7, wherein said generating a labeled robocall campaign training dataset further includes: when said semantic similarity score is determined to not be above the first threshold value determining that the first call is for a new robocall campaign for which no embedding vector is included among said plurality of embedding vectors to which the first embedding vector was compared; and in response to determining that the first call is for a new robocall campaign: (i) generating a first record, said first record including a unique call identifier for the first call, the first embedding vector, and a unique robocall campaign identifier; and (ii) storing the first record in a database, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of.

System Embodiment 9. The system of System Embodiment 8, wherein said generating a labeled robocall campaign training dataset further includes: when said semantic similarity score is determined to be above the first threshold value, determining that the first call is part of the first robocall campaign; and in response to determining that the first call is part of the first robocall campaign: (i) generating a first record, said first record including a unique call identifier for the first call, the first embedding vector, and a robocall campaign identifier corresponding to the first robocall campaign identifier, said first robocall campaign identifier being obtained from a second record including the second embedding vector and the first robocall campaign identifier; and (ii) storing the first record in a database, said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of, said second record being one of said plurality of records.

System Embodiment 9A. The system of System Embodiment 9, wherein the first record further includes a first number K of words of the converted text of the first portion of the audio content of the speech of the first call, K being a positive integer greater than 1 (e.g., K = 100); and wherein each of the plurality of records also includes a first number K of words of the converted text of the first portion of the audio content of the speech of the call to which the record corresponds.

System Embodiment 10. The system of System Embodiment 7, wherein each of the plurality of embedding vectors corresponds to a call meeting a first set of criteria, said first set of criteria being indicative of a robocall, said first set of criteria including a first criteria, said first criteria being that signaling for the call including a destination or callee (e.g., target) telephone number that was unallocated at the time of the call.

System Embodiment 10A. The system of System Embodiment 10, wherein the first set of criteria includes a second criteria, said second criteria being that the destination or callee telephone number had been unallocated for a first period of time (e.g., 2 years).

System Embodiment 10B. The system of System Embodiment 10A, wherein the first set of criteria includes a third criteria, said third criteria being that the calling party telephone number was not a telephone number for a government agency (e.g., school department, police department, fire department, health department, government emergency services agency, weather service agencies) or on a white list of calling party telephone numbers (e.g., numbers for legitimate calling campaigns such as for example political calling campaigns, weather alerts, school closing calling campaigns).

System Embodiment 11. The system of System Embodiment 2, wherein the first portion of audio content from the first call includes a first amount of speech.

System Embodiment 11A. The system of System Embodiment 11, wherein the first portion of audio content from the first call is for a first period of time (e.g., 60 seconds, 1 minute, 2 minutes, etc.).

System Embodiment 11B. The system of System Embodiment 11A, wherein the first period of time is the full length of time of the call after a message ("this call is being recorded") has been played by a recording device which answered the call.

System Embodiment 11C. The system of System Embodiment 11, wherein the first amount of speech is speech from a calling party.

System Embodiment 12. The system of System Embodiment 11, wherein the first amount of speech is an amount less than N words of speech, N being a positive integer (e.g., N = 100).

System Embodiment 13. The system of System Embodiment 12, wherein the first amount of speech is an amount greater than M words of speech, M being a positive integer less than N (e.g., M = 6). (This allows for the pruning or removal of calls that do not have a significant amount of speech for determining whether the call is a robocall and for calls that are likely misdials and have been hung up on relatively quickly after just a few words such as "hello" have been spoken.)

System Embodiment 13A. The system of System Embodiment 2, wherein the first portion of audio content from the first call is the entire audio content from the first call.

System Embodiment 13B. The system of System Embodiment 2, wherein said generating a labeled robocall campaign training dataset further includes: prior to converting said speech of the first portion of said audio content of the first call to text removing noise from the first portion of audio content; and after removing the noise from the first portion of audio content, filtering the audio content to identify the portions of the audio content which are speech.

System Embodiment 13C. The system of System Embodiment 2, wherein said converting, by a speech-to-text converter, speech included in a first portion of audio content from a first call to text includes: determining that the audio content includes speech; and when the determination is that the portion of the audio content includes speech further determining a language or languages (e.g., a message played in one language (e.g., English) and then repeated in a second language (e.g., Spanish)) in which the speech is spoken.

System Embodiment 13D. The system of System Embodiment 13C, wherein said generating a labeled robocall campaign training dataset further includes: when the speech is in multiple languages determining portions of the first portion of the audio content of the first call in which each language is spoken; and utilizing a language specific speech-to-text converter for each of the determined portions of the first portion of the audio content whose language matches the identified portion of the first portion of the audio content being converted to text.

System Embodiment 13F. The system of System Embodiment 13D, wherein said generating a labeled robocall campaign training dataset further includes: when the converted text for the first call is in multiple languages, (i) determining the language with the most words in the converted text to be a base language, and (ii) translating any of the text not in the base language to the base language, and (iii) using a Large Language Model embeddings-only encoder specifically designed for the base language (e.g., English) to generate a first embedding vector from the text for the first call.

System Embodiment 14.The system of System Embodiment 5, wherein generating a labeled robocall campaign training dataset further includes: extracting signaling features from a first call detail record corresponding to the first call; generating a first record for the first call, said first record including: said extracted signaling features, a first robocall campaign identifier, said first robocall campaign identifier being a unique identifier assigned to records corresponding to calls which have been determined to be part of the first robocall campaign; and labeling the first record as containing information for a robocall (e.g., labeling the record "POSITIVE").

System Embodiment 14A. The system of System Embodiment 14, wherein said labeling the first record as containing information for a robocall includes storing information in the record that indicates the record corresponds to a robocall (e.g., populating a label field of the record with the word "POSITIVE").

System Embodiment 14B. The system of System Embodiment 14, wherein said first record further includes a first call identifier for the first call, said first call being a Session Initiation Protocol call, said first call identifier being a SIP call-id for the first call or a generated identifier based on the SIP call-id for the first call.

System Embodiment 14C. The system of System Embodiment 14, wherein the first record further includes a first call identifier for the first call, the first call identifier including a destination calling number for the first call, a numerical date (e.g., day, month and year) on which the first call occurred, and a timestamp corresponding to the first call.

System Embodiment 14D. The system of System Embodiment 14, wherein the first record further includes a first call identifier, said first call identifier being a unique identifier which identifies the first call from other calls and which identifies the first record from other labeled robocall campaign training dataset records corresponding to other calls.

System Embodiment 15. The system of System Embodiment 14, wherein said generating a labeled robocall campaign training dataset further includes: extracting signaling features from a call detail record corresponding to a third call, said third call not having been determined to be a robocall (e.g., the callee or target telephone number is not an unallocated telephone number);
generating a record for the third call, said record for the third call including: said extracted signaling features from the call detail record corresponding to the third call; and labeling the record for the third call as containing information for a call which is not a robocall (e.g., labeling the record "NEGATIVE").

System Embodiment 15A. The system of System Embodiment 15, wherein the third record further includes: a robocall campaign identifier set to NULL or information indicating that the third call does not belong to a robocall campaign; and a call identifier for the third call (e.g., SIP call_id for the third call when the third call is a SIP call).

System Embodiment 16. The system of System Embodiment 15, wherein generating a labeled robocall campaign training dataset further includes: extracting signaling features from a call detail record for a fourth call; determining a call identifier for the fourth call from information included in the call detail record for the fourth call (e.g., SIP call_id); performing a search of a plurality of records using the call identifier for the fourth call as a search key, each record of the plurality of records corresponding to a different call having been determined to be a robocall, each record of the plurality of records including: an embedding vector for the call to which the record corresponds, a communications media fingerprint for the call to which the record corresponds, a robocall campaign identifier for the call to which the record corresponds, and a call identifier for the call to which the record corresponds; and in response to said search failing to identify a record from the plurality of records including the call identifier for the fourth call: obtaining a communications media fingerprint from a trace record for the fourth call; performing a fuzzy fingerprint search of the plurality of records using the communications media fingerprint for the fourth call; and when said fuzzy fingerprint search identifies a record from the plurality of records with a matching communications media fingerprint, (i) generating a record for the fourth call, said record for the fourth call including: said extracted signaling features from the call detail record for the fourth call, and a robocall campaign identifier obtained from the record with the matching communications media fingerprint, the call identifier for the fourth call; and (ii) labeling the record for the fourth call as containing information for a robocall (e.g., labeling the record "POSITIVE").

System Embodiment 17. The system of System Embodiment 16, wherein generating a labeled robocall campaign training dataset further includes: when said fuzzy fingerprint search does not identify a record from the plurality of records with a matching communications media fingerprint, (i) generating a record for the fourth call, said record for the fourth call including: said extracted signaling features from the call detail record for the fourth call, a robocall campaign identifier set to NULL or information indicating that the fourth call does not belong to a robocall campaign, and the call identifier for the fourth call (e.g., SIP call_id for the fourth call when the fourth call is a SIP call); and (ii) labeling the record for the fourth call as not containing information for a robocall (e.g., labeling the record "NEGATIVE").

System Embodiment 18. The system of System Embodiment 1, wherein one or more of the one or more robocall detection models is a classification model generated from or trained using non-media features (e.g., signaling related features such as source address, source identifier, calling party name, calling party number, calling party country of origin, time of day, SIP user agent content, ingress trunk group) included in labeled records of the labeled robocall campaign training data set.

System Embodiment 19. The system of System Embodiment claim 1, wherein training the one or more robocall detection models using said generated labeled robocall campaign training dataset includes performing operations to balance the labeled records from the robocall campaign dataset used to train the one or more robocall detection models (e.g., when the robocall campaign dataset includes more records labeled as not containing information for a call determined to be a robocall than records labeled as containing information for a call determined to be a robocall, performing an oversampling operation of the labeled records labeled as containing information for a call determined to be a robocall to balance the records used for training or performing an under sampling of the labeled records labeled as not containing information for a call determined to be a robocall to balance the records used for training).

System Embodiment 20. The system of System Embodiment 1, further comprising: receiving signaling information for a call, by a first deployed trained robocall detection model, said first deployed trained robocall detection model being one of said deployed one or more trained robocall detection models; and determining in real time, by the first deployed trained robocall detection model, that the received call is part of a first robocall campaign based on the received signaling information (e.g., calling party telephone number and typically at least one or a plurality of additional signaling feature for the call matches to a previous call determined to be part of a first robocall campaign); and determining, by the first deployed trained robocall detection model, a first robocall confidence score for the received call based on information about the first robocall campaign (e.g., the more calls previously detected as being part of the first robocall campaign and/or number of different calling party numbers corresponding to the first robocall campaign the higher the robocall confidence score indicating the higher the probability that the call is robocall - the robocall confidence score thus being elevated compared to models in which the calling party number is considered in isolation).

System Embodiment 21. The system of System Embodiment 1, wherein the system is implemented as a Kubernetes system, said first processor being part of a first Kubernetes node.

System Embodiment 22. The system of System Embodiment 1, wherein the system is implemented in a cloud, said first processor being part of a first compute node.

In the above list of numbered exemplary embodiments exemplary dependencies in the numbered embodiments are included with some numbered embodiments referring to a preceding numbered embodiment and thus depending from the preceding numbered embodiments. While an exemplary dependency is included in each dependent numbered embodiment it is to be understood that any dependent numbered embodiment may, and in some embodiments will, depend from any preceding numbered embodiment in the same list. Accordingly, dependent numbered embodiment should be interpreted as a multiple dependent numbered embodiment preceding from any of the preceding numbered embodiments in the same list with preceding numbered embodiments being required only to the extent the language in the preceding numbered embodiment is required for proper antecedent bases. Thus, intervening numbered embodiments should not be interpreted as necessary unless required for antecedent basis reasons and the dependent numbered embodiment should be interpreted as a multiple dependent embodiment which can depend from any earlier numbered embodiment despite a single preceding numbered embodiment being included as an example.

### List of Exemplary Numbered Non-transitory Computer Readable Medium Embodiments:

Non-transitory Computer Readable Medium Embodiment 1. A non-transitory computer readable medium including a first set of computer executable instructions which when executed by a processor of a system cause the system to perform the following operations: generating a labeled robocall campaign training dataset; training one or more robocall detection models using said generated labeled robocall campaign training dataset; and deploying one or more or all or any combination of said one or more trained robocall detection models in a communications network.

While various embodiments have been discussed above and in the claims below, it should be appreciated that not necessarily all embodiments include the same features and some of the features described herein are not necessary but can be desirable in some embodiments. Numerous additional features, embodiments and benefits of various embodiments are discussed in the claims which follow.

The techniques of various embodiments may be implemented using software, hardware and/or a combination of software and hardware. Various embodiments are directed to apparatus, e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers. Various embodiments are also directed to methods, e.g., method of controlling and/or operating devices such as, e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers. Various embodiments are also directed to machine, e.g., computer, readable medium, e.g., ROM, RAM, CDs, hard discs, etc., which include machine readable instructions for controlling a machine to implement one or more steps of a method. The computer readable medium is, e.g., non-transitory computer readable medium.

It is understood that the specific order or hierarchy of steps in the processes and methods disclosed is an example of exemplary approaches. Based upon design preferences, it is understood that the specific order or hierarchy of steps in the processes and methods may be rearranged while remaining within the scope of the present disclosure. The accompanying method claims present elements of the various steps in a sample order and are not meant to be limited to the specific order or hierarchy presented. In some embodiments, one or more processors are used to carry out one or more steps or elements of the described methods.

In various embodiments each of the steps or elements of a method are implemented using one or more processors. In some embodiments, each of the steps or elements are implemented using hardware circuitry.

In various embodiments nodes and/or elements described herein are implemented using one or more components to perform the steps corresponding to one or more methods, for example, speech-to-text processing , message reception, signal processing, sending, comparing, generating embedding vectors, performing similarity searches, performing vector searches, generating labeled training datasets, generating robocall detection models, training robocall detection models, deploying robocall detection models, performing searches, generating records, storing records, detecting calls which are robocall calls and/or belong to robocall campaigns, generating robocall confidence scores and/or probabilities, generating communications media fingerprints, performing fuzzy fingerprint searches, recording media (e.g., audio of a call), performing robocall detection mitigation operations, determining and/or transmission steps. Thus, in some embodiments various features are implemented using components or in some embodiments logic such as for example logic circuits. Such components may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium, e.g., a non-transitory computer readable medium, including machine executable instructions for causing a machine, e.g., processor and associated hardware, to perform one or more of the steps of the above-described method(s). Some embodiments are directed to a device, e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers, including a processor configured to implement one, multiple or all of the steps of one or more methods of the invention.

In some embodiments, the processor or processors, e.g., CPUs, of one or more devices, e.g., computing nodes such as e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers are configured to perform the steps of the methods described as being performed by the computing nodes, e.g., systems/devices, systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers. The configuration of the processor may be achieved by using one or more components, e.g., software components, to control processor configuration and/or by including hardware in the processor, e.g., hardware components, to perform the recited steps and/or control processor configuration. Accordingly, some but not all embodiments are directed to a device, e.g., computing node such as e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers with a processor which includes a component corresponding to each of the steps of the various described methods performed by the device in which the processor is included. In some but not all embodiments a device, e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers, includes a component corresponding to each of the steps of the various described methods performed by the device in which the processor is included. The components may be implemented using software and/or hardware.

Some embodiments are directed to a computer program product comprising a computer-readable medium, e.g., a non-transitory computer-readable medium, comprising code for causing a computer, or multiple computers, to implement various functions, steps, acts and/or operations, e.g., one or more steps described above. Depending on the embodiment, the computer program product can, and sometimes does, include different code for each step to be performed. Thus, the computer program product may, and sometimes does, include code for each individual step of a method, e.g., a method of controlling a computing device, system or node. The code may be in the form of machine, e.g., computer, executable instructions stored on a computer-readable medium, e.g., a non-transitory computer-readable medium, such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU or Graphics Processing Unit (GPU), configured to implement some or all of the steps of the methods described herein. The processor may be for use in, e.g., systems/devices, computing entities/devices, Kubernetes systems, Kubernetes nodes, analytics system, database systems, vector databases, data lakes, Policy and Routing Servers, classification models, neural networks, call processing devices, SIP call processing devices, session border controllers, communications devices, network nodes, network equipment devices, and/or servers described in the present application.

Numerous additional variations on the methods and apparatus of the various embodiments described above will be apparent to those skilled in the art in view of the above description. Numerous additional embodiments, within the scope of the present invention, will be apparent to those of ordinary skill in the art in view of the above description and the claims which follow. Such variations and embodiments are to be considered within the scope of the invention.

## Claims

1. A method comprising:
generating, by an analytics system (130, 602, or 400), a labeled robocall campaign training dataset, said generating the labeled robocall campaign training dataset includes:
converting, by a speech-to-text converter, speech included in a first portion of audio content from a first call to text,
creating a first embedding vector based on said text,
generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created, and
determining whether or not the semantic similarity score is above a first threshold value;
training, by the analytics system (130, 602 or 400), one or more robocall detection models (135, 667, or 718) using said generated labeled robocall campaign training dataset; and
deploying, by the analytics system (130, 602 or 400), one or more of said one or more trained robocall detection models (135 or 718) in a communications network (102 or 601).

2. The method of claim 1, wherein said generating, by an analytics system (130, 602, or 400), a labeled robocall campaign training dataset further includes:
prior to said generating a semantic similarity score by comparing the first embedding vector to a second embedding vector, said second embedding vector having been created from text converted from speech of a second portion of audio content from a second call, said second call being a robocall of a first robocall campaign, said semantic similarity score indicating how close in meaning the text of the speech from which the first embedding vector was created is to text of the speech from which the second embedding vector was created, determining that the first call is a robocall, said determining that the first call is a robocall includes:
determining that the first call included signaling information with a destination or callee telephone number that was unallocated at the time of the first call;
determining a word count for said text; and
in response to determining the word count for said text is greater than six words, determining that the first call is a robocall.

3. The method of any of claims 1 or 2, wherein said generating the semantic similarity score by comparing the first embedding vector to the second embedding vector is part of performing a semantic similarity search to identify an embedding vector that is a closest match semantically to the first embedding vector from a plurality of embedding vectors, each of the plurality of embedding vectors having been created from text converted from speech of a robocall from a plurality of different robocalls, said semantic similarity search identifying the robocall with the highest semantic similarity score when compared to the first embedding vector.

4. The method of claim 3, wherein said generating a labeled robocall campaign training dataset further includes:
when said semantic similarity score is determined to not be above the first threshold value determining that the first call is for a new robocall campaign for which no embedding vector is included among said plurality of embedding vectors to which the first embedding vector was compared; and
in response to determining that the first call is for a new robocall campaign:
(i) generating a new record, said new record including a unique call identifier for the first call, the first embedding vector, and a unique robocall campaign identifier; and
(ii) storing the new record in a database (116, 654, or 420), said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to a robocall campaign to which the call corresponding to the call identifier has been determined to be part of.

5. The method of claim 3, wherein said generating a labeled robocall campaign training dataset further includes:
when said semantic similarity score is determined to be above the first threshold value, determining that the first call is part of the first robocall campaign; and
in response to determining that the first call is part of the first robocall campaign:
(i) generating a first record, said first record including a unique call identifier for the first call, the first embedding vector, and a robocall campaign identifier corresponding to the first robocall campaign identifier, said first robocall campaign identifier being obtained from a second record including the second embedding vector and the first robocall campaign identifier; and
(ii) storing the first record in a database (116, 654, or 420), said database including a plurality of records, said plurality of records including one record for each of said plurality of embedding vectors, each of said plurality of records including a call identifier which identifies the call to which the record corresponds, the embedding vector for the call corresponding to the call identifier, and a robocall campaign identifier corresponding to the robocall campaign to which the call corresponding to the call identifier has been determined to be part of, said second record being one of said plurality of records.

6. The method of any one of claims 3 to 5, wherein each of the plurality of embedding vectors corresponds to a call meeting a first set of criteria, said first set of criteria being indicative of a robocall, said first set of criteria including a first criteria, said first criteria being that signaling for the call includes a destination or callee telephone number that was unallocated at the time of the call.

7. The method of claim 6, wherein said generating a labeled robocall campaign training dataset further includes:
extracting signaling features from a first call detail record corresponding to the first call, said extracted signaling features including calling party telephone number; and
wherein said first record further includes said extracted signaling features; and
wherein said first robocall campaign identifier is a unique identifier assigned to records corresponding to calls which have been determined to be part of the first robocall campaign; and
labeling the first record as containing information for a robocall.

8. The method of claim 7, wherein said generating a labeled robocall campaign training dataset further includes:
extracting signaling features from a call detail record corresponding to a third call, said third call having been determined not to be a robocall;
generating a record for the third call, said record for the third call including: said extracted signaling features from the call detail record corresponding to the third call; and
labeling the record for the third call as containing information for a call which is not a robocall.

9. The method of claim 8, wherein generating a labeled robocall campaign training dataset further includes:
extracting signaling features from a call detail record for a fourth call;
determining a call identifier for the fourth call from information included in the call detail record for the fourth call;
performing a search of a plurality of records using the call identifier for the fourth call as a search key, each record of the plurality of records corresponding to a different call having been determined to be a robocall, each record of the plurality of records including: an embedding vector for the call to which the record corresponds, a communications media fingerprint for the call to which the record corresponds, a robocall campaign identifier for the call to which the record corresponds, and a call identifier for the call to which the record corresponds; and
in response to said search failing to identify a record from the plurality of records including the call identifier for the fourth call: obtaining a communications media fingerprint from a trace record for the fourth call;
performing a fuzzy fingerprint search of the plurality of records using the communications media fingerprint for the fourth call; and
when said fuzzy fingerprint search identifies a record from the plurality of records with a matching communications media fingerprint, (i) generating a record for the fourth call, said record for the fourth call including: said extracted signaling features from the call detail record for the fourth call, and a robocall campaign identifier obtained from the record with the matching communications media fingerprint, the call identifier for the fourth call; and (ii) labeling the record for the fourth call as containing information for a robocall.

10. The method of claim 9, wherein generating a labeled robocall campaign training dataset further includes:
when said fuzzy fingerprint search does not identify a record from the plurality of records with a matching communications media fingerprint, (i) generating a record for the fourth call, said record for the fourth call including: said extracted signaling features from the call detail record for the fourth call, a robocall campaign identifier set to NULL or information indicating that the fourth call does not belong to a robocall campaign, and the call identifier for the fourth call; and (ii) labeling the record for the fourth call as not containing information for a robocall.

11. The method of any one of claims 1-10,
wherein said generating a labeled robocall campaign training dataset further includes: prior to or during the process of converting said speech of the first portion of said audio content of the first call to text: (i) identifying and removing portions of the audio content which include sounds which are not indicative of speech, (ii) identifying and removing the portion of the audio content determined to be silence, (iii) identifying and removing portions of the audio content which include an audio signal below the level of human audible sound, (iv) identifying and removing portions of the audio content which include an audio signal above the level of human audible sound, and (v) making a determination that the remaining portion of the first portion of audio content includes speech when it is greater than a first period of time.

12. The method of any one of the claims 1-11, wherein said creating a first embedding vector based on said text includes: utilizing a Large Language Model (LLM) embeddings-only neural network encoder to create the first embedding vector based on said text.

13. The method of any one of claims 1-12, further comprising:
detecting in real time, by a first deployed trained robocall detection model (135 or 718), that a received call is part of the first robocall campaign based on signaling information for the received call, said first deployed trained robocall detection model being one of said deployed one or more trained robocall detection models; and
performing a robocall mitigation operation in response to detecting that the received call is part of the first robocall campaign.

14. An analytics system (130, 602 or 400) comprising:
memory (182 or 410); and
a first processor (180 or 406), said first processor configured to control the analytics system (130, 602, or 400) to perform all steps of a method according to any one of claims 1 to 13.

15. A non-transitory computer readable medium (182 or 410) including a first set of computer executable instructions which cause an analytics system (130 or 400) to perform all steps of a method according to any one of claims 1 to 13.
